(19) Europäisches Patentamt
European Patent Office
Office européen des brevets

(11) **EP 2 875 562 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **13732968.6**

(22) Anmeldetag: **02.07.2013**

(51) Internationale Patentklassifikation (IPC):
*H02J 3/16* (2006.01)        *F03D 9/00* (2016.01)
*H02J 3/26* (2006.01)        *H02J 3/38* (2006.01)
*F03D 7/02* (2006.01)        *F03D 7/04* (2006.01)

(52) Gemeinsame Patentklassifikation (CPC):
**F03D 7/048; F03D 7/0284; H02J 3/16; H02J 3/26; H02J 3/381; H02J 3/48; H02J 3/50;** H02J 2300/28; Y02E 10/72; Y02E 10/76; Y02E 40/30; Y02E 40/50

(86) Internationale Anmeldenummer:
**PCT/EP2013/063974**

(87) Internationale Veröffentlichungsnummer:
**WO 2014/012789 (23.01.2014 Gazette 2014/04)**

(54) **VERFAHREN ZUM STEUERN EINES WINDPARKS**

METHOD FOR CONTROLLING A WIND FARM

PROCÉDÉ DE COMMANDE D'UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **20.07.2012   DE 102012212777**

(43) Veröffentlichungstag der Anmeldung:
**27.05.2015   Patentblatt 2015/22**

(73) Patentinhaber: **Wobben Properties GmbH**
**26607 Aurich (DE)**

(72) Erfinder: **DIEDRICHS, Volker**
**18209 Bad Doberan (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 1 512 869          EP-A2- 2 236 820
EP-A2- 2 267 302          WO-A1-97/45908
WO-A2-2007/006565        WO-A2-2009/083448
DE-A1-102007 005 165     DE-A1-102007 039 697

- JOSÉ LUIS RODRÍGUEZ-AMENEDORODRIGUEZ-AMENEDO ET AL: "Automatic Generation Control of a Wind Farm With Variable Speed Wind Turbines", IEEE TRANSACTIONS ON ENERGY CONVERSION, IEEE SERVICE CENTER, PISCATAWAY, NJ, US, Bd. 17, Nr. 2, 1. Juni 2002 (2002-06-01), XP011072090, ISSN: 0885-8969
- BRAUNER G: "NETZANBINDUNG VON WINDKRAFTANLAGEN", ELEKTROTECHNIK UND INFORMATIONSTECHNIK, SPRINGER VERLAG, WIEN, AT, Bd. 116, Nr. 7/08, 1. Januar 1999 (1999-01-01), Seiten 428-432, XP000926851, ISSN: 0932-383X

EP 2 875 562 B1

**Beschreibung**

Die vorliegende Erfindung betrifft ein Verfahren zum Steuern eines Windpark sowie einen entsprechenden Windpark. Insbesondere betrifft die vorliegende Erfindung das Steuern eines Windparks zum Einspeisen elektrischer Leistung an einem Netzanschlusspunkt in ein elektrisches Wechselspannungsnetz sowie einen entsprechenden Windpark.

Windparks sind allgemein bekannt, sie betreffen mehrere Windenergieanlagen, die organisatorisch zusammen gehören. Insbesondere speisen alle zu einem Windpark gehörenden Windenergieanlagen an einem gemeinsamen Netzanschlusspunkt in ein elektrisches Wechselspannungsnetz ein. Üblicherweise erzeugt jede Windenergieanlage für sich einen einzuspeisenden elektrischen Strom, nämlich üblicherweise einen 3-phasigen einzuspeisenden elektrischen Strom. Hierfür referenziert die Windenergieanlage auf die Spannung in dem einzuspeisenden elektrischen Wechselspannungsnetz, das nachfolgend auch vereinfachend Netz genannt wird, insbesondere nach Amplitude, Frequenz und Phase der Spannung.

Darüber hinaus ist es inzwischen bekannt und wünschenswert, Windenergieanlagen, insbesondere Windparks, auch zur Netzstützung einzusetzen. D.h., hier wird nicht nur das Ziel verfolgt, möglichst viel Energie in das Netz einzuspeisen, sondern auch so einzuspeisen und ggf. sogar die eingespeiste Leistung zu reduzieren, dass das Netz im elektrischen Sinne gestützt werden kann. Erste Patentanmeldungen, die sich mit solchen Themen beschäftigt haben, sind WO 02/086315, WO 02/086314, WO 01/86143, WO 99/33165, WO 02/044560. Aus der WO 03/030329 A1 ist ein Verfahren bekannt, bei dem die gesamte Abgabeleistung des Windparks extern von dem Betreiber des angeschlossenen elektrischen Versorgungsnetzes reduziert wird kann.

Weiterhin wird hingewiesen auf den Aufsatz "Loss of (Angle) Stability of Wind Power Plants" von V. Diedrichs et al., eingereicht für und vorgetragen auf dem "10th International Workshop on Large-Scale Integration of Wind Power into Power Systems as well as on Transmission Networks for Offshore Wind Farms, Aarhus (Denmark), 25 - 26 October 2011". Dort wurde grundsätzlich auf das Problem hingewiesen, dass der Stabilitätsverlust im Netz - die Loss of Stability - grundsätzlich auch für an das Versorgungsnetz zum Einspeisen angeschlossene Windenergieanlagen auftreten kann.

Hierbei kann der Betreiber einen prozentualen Wert vorgeben, um den dann die jeweiligen Windenergieanlagen ihre Leistung reduzieren können.

Solche Ansätze sind teilweise bereits zum Stabilisieren des Netzes vorgesehen. Insbesondere berücksichtigen diese Lösungen ein Anpassen der eingespeisten Leistung an den aktuellen Bedarf, insbesondere sollen sie ein Überangebot oder ein Unterangebot an Leistung im Netz berücksichtigen.

Eine übergeordnete Notwendigkeit beim Einspeisen elektrischer Leistung, nämlich sowohl Wirkleistung als auch Blindleistung, ist die Sicherstellung der Stabilität von Energiesystemen und Kraftwerken, einschließlich Windenergieanlagen und Windparks. Die Stabilität bezieht sich hierbei auf Frequenz und Spannung simultan in allen Bereichen des Energiesystems.

Der Verlust einer solchen Stabilität wird auch allgemein als "Loss of Stability" bezeichnet und kann als LOS abgekürzt werden. "Loss of Stability" beschreibt physikalische Vorgänge und Zustände, welche die genannte Stabilität nicht mehr sicherstellen und dass diese im Grundsatz zu vermeiden sind bzw. möglichst schnell zu beenden sind, sollten sie bereits vorliegen. Solche Probleme sind grundsätzlich selten, dafür aber umso gravierender. Bspw. gehört hierzu eine bekannte Abschaltung von Teilen des Netzes, wie es bspw. in den USA 2004 vorgekommen ist, oder des gesamten Energiesystems, wie es 2004 in Italien vorgekommen ist.

Grundsätzlich ist das technische Wissen bzgl. dieses Themengebietes Stabilität weit ausgearbeitet und in verschiedensten Publikationen niedergelegt. Als internationales anerkanntes Standardwerk gilt hierbei Kundur, P.: Power Systems Stabililty and Control, McGraw-Hill.

Für eine globale Beurteilung der Betreibbarkeit von Kraftwerken, meist mit Synchrongeneratoren, an Netzanschlusspunkten mit Energiesystemen dient das sog. Kurzschlussstromverhältnis, das auch als "Short Circuit Ratio" abgekürzt SCR bezeichnet wird.

Neben einer solchen globalen oder absoluten Beurteilung mittels des SCR erfolgen weitere Beurteilungen mittels spezieller Kriterien. Solche Kriterien zielen auf verschiedene Typen stabilitätsrelevanter Vorgänge ab, wie bspw. der Vorgang eines Spannungszusammenbruchs (voltage collaps) oder auf die Stabilität eines Winkels, nämlich Phasenwinkel im Netz, was allgemein als "angle stability" bezeichnet wird. Diese Beurteilungen liefern insbesondere Metriken bzw. Maßstäbe für Stabilitätsabstände.

Das Kurzschlussstromverhältnis SCR ist das Verhältnis der Kurzschlussleistung zur Anschlussleistung. Hier wird unter Kurzschlussleistung diejenige Leistung verstanden, die das betreffende Versorgungsnetz an dem betrachteten Netzanschlusspunkt, an dem das dann in Rede stehende Kraftwerk angeschlossen werden soll, bereitstellen kann, wenn dort ein Kurzschluss auftritt. Die Anschlussleistung ist die Anschlussleistung des anzuschließenden Kraftwerks, insbesondere also die Nennleistung des anzuschließenden Generators.

Hinsichtlich Anforderungen an ein Kurzschlussstromverhältnis, SCR, wird bisher für den sicheren Betrieb von Kraftwerken mit Synchrongeneratoren ein Kurzschlussstromverhältnis von SCR > 4, praktisch häufig aber SCR > 10 als notwendig angesehen. Hierzu wird bspw. für Deutschland verwiesen auf den VDN Transmission Code 2007. Für den Anschluss von Windenergieanlagen oder Windparks sind Forderungen eines Kurzschlussstromverhältnisses von SCR>4...6 marktüblich.

Das entsprechend erforderliche Maß des SCR schränkt an einem gegebenen Netzanschlusspunkt, der allgemein auch als "Point of Common Coupling", kurz PCC bezeichnet wird, die Kraftwerksleistung ein bzw. es bestimmt erforderliche Netzverstärkungen.

Die Kurzschlussleistung ist eine Netzeigenschaft an dem betreffenden Netzanschlusspunkt und damit zunächst eine vorgegebene Größe, sofern das entsprechende Netz dort bereits besteht. Da das Kurzschlussstromverhältnis einen bestimmten Wert, nämlich insbesondere im Bereich von 4 bis 6, nicht unterschreiten soll, ist die Leistung eines an einem Netzanschlusspunkt anzuschließenden Kraftwerks oder eines dort anzuschließenden Windparks begrenzt. Es können also nur ein Kraftwerk bis zu einer bestimmten Größe angeschlossen werden, oder es wird erforderlich, das Netz entsprechend auszubauen, um den Anschluss eines Kraftwerks mit höherer Leistung möglich zu machen.

Das deutsche Patent- und Markenamt hat in der Prioritätsanmeldung folgenden Stand der Technik recherchiert: DE 10 2009 030 725 A2, WO 2011/050807 A2 und Loss of (Angle) Stability of Wind Power Plants- The Underestimated Phenomenon in Case of Very Low Short Circuit Ratio in 10th International Workshop on Large-Scale Integration of Wind Power into Power Systems as well as on Transmission Networks for Offshore Wind Farms, Aarhus, 26. October 2011 von Volker Diedrichs, Alfred Beekmann, Stephan Adloff.

Das Europäische Patentamt hat zu vorliegender Anmeldung außerdem folgenden Stand der Technik recherchiert: EP 2 267 302 A2, Jose Luis Rodriguez-Amenedorodriguez-Amenedo et al: "Automatic Generation Control of a Wind Farm with Variable Speed Wind Turbines", IEEE transactions on energy conversion, IEEE service center, piscataway, NJ, US, bd. 17, Nr. 2, 1. Juni 2002 (2002-06-01), xp011072090, ISSN: 0885-8969; EP 1 512 869 A1, DE 10 2007 005165 A1, DE 10 2007 039697 A1, WO 2009/083448 A2; Brauner, G.: "Netzanbindung von Windkraftanlagen", Elektrotechnik und Informationstechnik, Springer Verlag, Wien, AT, Bd. 116, Nr. 7/08, 1. Januar 1999 (1999-01-01), Seiten 428-432, XP000926851, ISSN: 0932-383X und WO 97/45908 A1.; EP 2 236 820 A2 und WO 2007/006565 A2.

Das Dokument EP 2 267 302 A2 betrifft einen Windpark und Verfahren zum Regeln eines Windparks mit mehreren Regelebenen. Der Artikel von Jose Luis Rodriguez-Amenedorodriguez-Amenedo et al betrifft eine automatische Erzeugungssteuerung eines Windparks mit drehzahlgeregelten Windkraftanlagen mit mehreren Überwachungsebenen, von denen eine eine Überwachungsebene für Wirk- und Blindleistungseinspeisung betrifft. Das Dokument EP 1 512 869 A1 betrifft eine Spannungssteuerung für einen Windpark mit einer zweistufigen Blindleistungs-Spannungs-Steuerung. Das Dokument DE 10 2007 005165 A1 betrifft ein Verfahren, Vorrichtung und Computerprogrammprodukt zur Stromeinspeisung die eine Antwort auf einen Gegensystemstrombedarf während einer Störung des Netzsystems liefern. Das Dokument DE 10 2007 039697 A1 betrifft ein Verfahren und Vorrichtung zur Kompensation von Schwingungseffekten bei Netzunsymmetrie bei einer doppeltgespeisten Asynchronmaschine. Das Dokument WO 2009/083448 A2 betrifft ein Verfahren zur Netzspannungssteuerung unter Berücksichtigung einer Kurzschlussimpedanz. Das Paper von Brauner, G betrifft die Netzanbindung von Windkraftanlagen, wobei in Windparks eine Spannungsstützung durch Blindleistungsregelung vorgesehen ist. Das Dokument WO 97/45908 A1 bezieht sich auf einen Windenergiepark, in dem Windenergieanlagen DC-seitig parallelgeschaltet sind.. das Dokument EP 2 236 820 A2 betrifft ein Spannungssteuerverfahren und System für ein Stromkraftwerk und einen Windpark; das Dokument WO 2007/006565 A2 betrifft ein Verfahren zur Leistungsregelung eines Windparks.

Der vorliegenden Erfindung liegt somit die Aufgabe zugrunde, wenigstens eins der o.g. Probleme zu adressieren. Insbesondere soll eine Lösung vorgeschlagen werden, bei der eine Windenergieanlage oder ein Windpark an einen Netzanschlusspunkt mit einem möglichst kleinen Kurzschlussstromverhältnis, insbesondere mit einem Kurzschlussstromverhältnis von SCR>1,5...2 angeschlossen und stabil betrieben werden kann. Insbesondere soll dies für eine Windenergieanlage oder einen Windpark mit einer Leistungseinspeisung mittels Vollumrichtern, nämlich sog. spannungsgesteuerten Wechselrichtern erreicht werden, die auch als "Voltage Source Converter", kurz VSC, bezeichnet werden. Zumindest soll eine alternative Lösung vorgeschlagen werden.

Erfindungsgemäß wird ein Verfahren zum Steuern eines mehrere Windenergieanlagen umfassenden Windparks gemäß Anspruch 1 vorgeschlagen. Demnach wird von einem Windpark mit mehreren Windenergieanlagen ausgegangen, der elektrische Leistung an einem gemeinsamen Netzanschlusspunkt, PCC, in ein elektrisches Wechselspannungsnetz einspeist. Das Verfahren zum Steuern des Windparks kann somit auch als Verfahren zum Einspeisen elektrischer Leistung mittels eines Windparks angesehen oder bezeichnet werden. Hierbei wird zunächst einmal ein 3-phasiger Strom an dem Netzanschlusspunkt eingespeist.

Weiterhin wird die Netzspannung am Netzanschlusspunkt erfasst. Das Erfassen erfolgt insbesondere durch Messung, wobei die tatsächlich weiter verwendeten Werte der erfassten Netzspannung einer weiteren Verarbeitung, insbesondere rechnerischen Verarbeitung unterzogen werden können.

Die erfasste Netzspannung wird dann mit wenigstens einem vorgegebenen Sollwert verglichen. Das Verfahren betrifft die stabile Einspeisung elektrischer Leistung in ein elektrisches Wechselspannungsnetz, das nachfolgend auch vereinfacht als Netz bezeichnet wird. Entsprechend ist es für den Fachmann klar, dass der Vergleich möglichst schnell möglichst in Echtzeit und möglichst häufig, vorzugsweise kontinuierlich oder quasi kontinuierlich erfolgt. Zudem wird grundsätzlich von einem üblichen Wechselspannungsnetz ausgegangen, dass eine Netzfrequenz von 50Hz oder 60Hz aufweist. Entsprechend schnell und häufig muss auch die Erfassung der Netzspannung am Netzanschlusspunkt erfolgen.

Weiterhin wird für jede Windenergieanlage wenigstens ein Sollwert bestimmt. Dieser Sollwert wird abhängig von dem durchgeführten Vergleich bestimmt, nämlich der erfassten Netzspannung mit einem Sollwert für die Spannung. Der jeweilige Sollwert wird dabei so bestimmt, dass ein Stabilitätskriterium am Netzanschlusspunkt eingehalten werden kann. Entsprechend wird dieser Sollwert ebenfalls ständig neu bestimmt und entsprechend abhängig von dem ebenfalls ständig neu durchgeführten Vergleich eingestellt bzw. damit auch einer sich ändernden Situation nachgeführt. Der Sollwert kann sich somit ständig ändern und somit liegen zeitlich nacheinander mehrere Sollwerte vor. Entsprechend betrifft das Verfahren auch das Bestimmen von Sollwerten. Diese Sollwerte können, ggf. auch nur anfänglich, für mehrere Windenergieanlagen im Park identisch sein, oder sie können an jede Windenergieanlage individuell angepasst sein. Eine solche individuelle Anpassung hängt nicht zuletzt von der Art des Sollwertes ab, und davon, ob die jeweiligen Windenergieanlagen gleich sind oder nicht. Die Vergabe des Sollwertes kann auch von der örtlichen Anordnung der jeweiligen Windenergieanlage im Park abhängen, nämlich insbesondere dann, wenn elektrische Verbindungsleitungen von der jeweiligen Windenergieanlage zum gemeinsamen Netzanschlusspunkt einen signifikanten Unterschied auf die elektrische Verbindung zwischen der jeweiligen Windenergieanlage und dem Netzanschlusspunkt ausmacht.

Die Sollwerte werden an Anlagensteuereinheiten der einzelnen Windenergieanlagen übergeben bzw. übertragen. Somit ist vorgesehen, dass jede Windenergieanlage eine eigene Ansteuereinheit hat und dieser entsprechenden Sollwerte zugeführt werden. Die Windenergieanlage bzw. ihre individuelle Anlagensteuereinheit erhält somit wenigstens einen Sollwert bzw. eine Folge von Sollwerten von einer zentralen Stelle, passt aber die nachfolgende konkrete Steuerung in der Windenergieanlage individuell an. Insbesondere das konkrete Erzeugen des einzuspeisenden 3-phasigen Stroms, also der einzuspeisenden einzelnen Phasenströme nach Betrag, Phase und Frequenz wird von jeder Anlagensteuereinheit jeder Windenergieanlage individuell durchgeführt.

Die so zum Einspeisen erzeugten elektrischen Ströme jeder Windenergieanlage werden dann gemeinsam an den Netzanschlusspunkt des Windparks übertragen und dort eingespeist. Insbesondere werden die Ströme hierfür mit weiteren Strömen anderer Windenergieanlagen linear überlagert. Hierzu kann jede Windenergieanlage eigene Ausgangsdrosseln und/oder einen Ausgangstransformator aufweisen.

Grundsätzlich sind die Ursachen für die Vorgabe eines Kurzschlussstromverhältnisses von SCR>4, oder sogar SCR>6 begründet. Bei geringen Kurzschlussstromverhältnissen ist mit stark ansteigenden bzw. abfallenden, insbesondere exponentiell ansteigenden bzw. abfallenden, Sensitivitäten der Spannung am gemeinsamen Netzanschlusspunkt PCC zu rechnen, nämlich abhängig der jeweils eingespeisten Blind- und Wirkleistung bzw. als Reaktion darauf. Hierbei können Instabilitäten bei den internen Regelungen in den Windenergieanlagen auftreten, sofern die Spannung am Netzanschlusspunkt für diese Regelungen als Ist-Wert verwendet wird. Weiterhin können Instabilitäten von Spannungsregelungen auftreten. Ebenso besteht die Gefahr eines Stabilitätsverlustes, nämlich eines sog. "Loss of Stability" auf der Grundlage der Mechanismen eines Spannungszusammenbruchs, der auch als "Voltage Collapse" genannt wird und/oder auf Grundlage einer Winkelstabilität, bzw. eines Verlustes einer solchen Winkelstabilität, was auch als "angle stability" bezeichnet wird.

Die vorgeschlagene Lösung sieht somit insbesondere eine Verhinderung der Instabilität bei Windenergieanlagen - internen Regelungen bei der Verwendung der Spannung am gemeinsamen Anschlusspunkt als Ist-Wert vor.

Ebenfalls soll eine Instabilität von Spannungsregelungen verhindert werden, welche die Blindleistung der Windenergieanlage oder des Windparks als Stellgröße benutzen.

Schließlich soll auch vermieden werden, dass sich das System, also insbesondere der einspeisende Windpark, zu stark an eine Stabilitätsgrenze, einer sog. LOS-Grenze, annähert.

Vorzugsweise wird vorgeschlagen, dass auch der an dem Netzanschlusspunkt eingespeiste Strom erfasst wird, insbesondere dort gemessen wird bzw. dass aus einer Messung unmittelbar am oder unmittelbar hinter dem Netzanschlusspunkt der eingespeiste Strom bestimmt wird. Hierdurch hat die Regelung als Grundlage die tatsächlich eingespeisten Ströme. Etwaige Abweichungen zwischen Sollstrom bzw. Sollströmen und dem tatsächlich eingespeisten Strom werden somit berücksichtigt. Ebenfalls kann die tatsächlich eingespeiste Leistung, insbesondere sowohl die eingespeiste Blindleistung auch die als eingespeiste Wirkleistung erfasst werden, wenn die jeweiligen Ströme und Spannung nach Betrag und Phase bekannt sind. Bei einer Messung am Netz wird auch die Reaktion des Netzes erfasst und berücksichtigt. Diese Reaktion des Netzes reagiert auf die tatsächlich eingespeiste Leistung, also auf die tatsächlich eingespeisten Ströme und insoweit können durch die Messungen dort auch Reaktionen des Netzes den tatsächlich eingespeisten elektrischen Größen zugeordnet werden.

Außerdem oder alternativ wird das Erfassen des eingespeisten Stroms, das Erfassen der Netzspannung am Netzanschlusspunkt, das Vergleichen der am Netzanschlusspunkt erfassten Netzspannung mit wenigstens einem vorgegeben Sollwert und/oder das Bestimmen der Sollwerte von einer Zentralsteuereinheit durchgeführt. Es ist somit eine Einheit für mehrere Windenergieanlagen, insbesondere für alle Windenergieanlagen des Parks vorgesehen, die diese genannten sensiblen Daten erfasst, misst und/oder berechnet. Dadurch wird auch verhindert, dass die einzelnen Windenergieanlagen bzw. deren Regelungen gegeneinander arbeiten können, weil eine solche Zentralsteuereinheit auch einen zeitlich stabilen Sollwert vorgeben kann. Eine geringe Regelungsschwankung macht sich entsprechend nicht sofort bemerkbar und/oder kann nicht oder jedenfalls nur viel schlechter zu einer Kettenreaktion für die anderen Windenergieanlagen führen, die an denselben Netzanschlusspunkt angeschlossen sind. Insbesondere werden Effekte vermieden, bei denen bspw. eine erste Windenergieanlage zu einer Spannungsänderung am Netzanschlusspunkt führt und eine zweite Windenergieanlage basieren auf dieser erfassten Spannungsänderung bspw. regelungstechnisch entgegensteuert, was wiederum zu einem Effekt wie einer Spannungsänderung führen kann, die wiederum die erste Windenergieanlage zum Gegensteuern bewegt, wodurch eine Kettenreaktion in Gang gesetzt werden könnte.

Die Anlagensteuereinheiten der einzelnen Windenergieanlagen, die insbesondere hier ihre Sollwerte von der Zentralsteuereinheit erhalten, steuern individuell die Windenergielange und insbesondere steuern sie individuell das Erzeugen des jeweils einzuspeisenden elektrischen 3-phasigen Stroms. Somit ist diese Erzeugung an die konkrete Windenergieanlage angepasst und die Steuerung dieser Anlagensteuereinheiten entsprechend individualisiert. Hinsichtlich einer Referenzierung, also insbesondere einer Erfassung von Frequenz und Phase, kann jede Anlagensteuereinheit jeder Windenergieanlage einzeln messen bzw. zentral aufgenommene Messwerte oder Erfassungswerte am Netzanschlusspunkt individuell berücksichtigen. Jedoch beschränkt sich diese direkte Berücksichtigung von Messwerten in den einzelnen Anlagensteuereinheiten insbesondere auf diese Referenzierung. Insbesondere die Höhe der einzuspeisenden Wirkleistung und einzuspeisenden Blindleistung wird nicht von jeder einzelnen Anlagensteuereinheit festgelegt oder bestimmt, sondern durch diese zentrale Steuereinheit vorgegeben.

Vereinfachend ausgedrückt, bildet die Zentralsteuereinheit einen ruhenden Pol und die Möglichkeit einer zentralen gemeinsamen Vorgabe wichtiger stabilitätsrelevanter Sollwerte, wohingegen individuelle Anlagensteuereinheiten an jede einzelne Windenergieanlage funktionell angepasst ist, um dort insbesondere die konkreten einzuspeisenden Ströme vorzugeben.

Die individuelle und funktionelle Anpassung der einzelnen Anlagensteuereinheiten kann vorzugsweise in die Betriebssteuerung der Windenergieanlage eingreifen und bspw. eine Reduzierung der aus dem Wind aufgenommenen Leistung durch eine Verstellung der Rotorblätter der Windenergieanlage steuern. Dieses allgemein als Pitchen bekannte Verstellen der Rotorblätter nimmt die Windenergieanlage, insbesondere ihre Anlagensteuereinheit, individuell vor. Die Vorgabe bzw. der Auslöser für das Durchführen einer solchen Reduktion geht aber insbesondere von der Zentralsteuereinheit aus.

Durch eine solche Aufteilung zwischen einer Zentralsteuereinheit und individuellen Anlagensteuereinheiten mit den beschriebenen Aufgaben bzw. der beschriebenen Aufgabenverteilung kann insbesondere eine Instabilität einer Windenergieanlagen-internen-Regelung bei Verwendung der Spannung des Netzanschlusspunktes als Ist-Wert vermieden werden, wenn diese nicht nur zum Referenzieren benutzt wird. Ebenso werden Instabilitäten von Spannungsregelungen, welche die Blindleistung der Windenergieanlage oder des Windparks als Stellgröße verwenden, verhindert.

Außerdem oder alternativ erfolgt das Bestimmen der Sollwerte abhängig von wenigstens einem veränderlichen Stabilitätskriterium, wobei das Stabilitätskriterium insbesondere abhängig ist von einem Netzzustand des Wechselspannungsnetzes am Netzanschlusspunkt. Das Stabilitätskriterium kann bspw. von der Amplitude der Netzspannung abhängen, oder einer Veränderung oder Veränderungsgeschwindigkeit der Amplitude der Netzspannung, oder von der Frequenz oder der Änderung der Frequenz der Netzspannung. Das Stabilitätskriterium als solches kann eine Abweichung der Ist-Spannung von der Soll-Spannung sein und selbst von der Spannung abhängen.

Um nur ein simples, plakatives Beispiel zu nennen, könnte das Stabilitätskriterium eine maximal zulässige Spannungsabweichung von bspw. 10 % Überspannung sein, wenn die Spannungsfrequenz exakt dem Sollwert entspricht. Liegt die Frequenz aber wenigstens geringfügig über der Sollfrequenz oder steigt die Frequenz im Netz an, könnte die genannte zugelassene Überspannung von 10 % auf 5 % Prozent gesenkt werden. Somit würde in diesem Beispiel das Stabilitätskriterium in Abhängigkeit von der Spannung überprüft werden, nämlich durch eine Überprüfung der Spannungshöhe, und gleichzeitig abhängig von der Frequenz angepasst werden, also im plakativ genannten Beispiel zwischen 5 % und 10 % Überspannung variiert werden.

Dabei kommt eine Berücksichtigung der Spannung am Netzanschlusspunkt netzseitig oder parkseitig in Betracht. Es können auch die Spannungen an den Klemmen der Windenergieanlagen eine Berücksichtigung bilden.

Abhängig von diesem Stabilitätskriterium wird dann wenigstens ein Sollwert für die Windenergieanlagen verändert. Insbesondere kann entsprechend ein Sollwert für die Blindleistung oder ein Sollwert für die Wirkleistung oder für beides geändert werden.

Als Stabilitätskriterium kann bspw. auch oder alternativ die vom Windpark eingespeiste Blindleistung und/oder die vom Windpark eingespeiste Wirkleistung zugrundegelegt werden. Hier kann das Stabilitätskriterium insbesondere so aussehen, dass eine Vorgabe als Wert oder als Bereich für die einzuspeisende Wirkleistung oder die einzuspeisende Blindleistung existiert und die Einhaltung dieser Vorgabe entsprechend überprüft wird. Insbesondere die eingespeiste Wirkleistung ist nur begrenzt beeinflussbar, weil die einspeisbare Wirkleistung jedenfalls von dem vorherrschenden Wind abhängt. Bei einem vorgeschlagenen Stabilitätskriterium kann auch das Verhältnis von Wirkleistung zu Blindleistung relevant sein. Bspw. kann eine bestimmte Anpassung der Blindleistung an die von der Wirkleistung sinnvoll sein und zugrundegelegt werden.

Vorzugsweise liegt dem Bestimmen der Sollwerte eine Zerlegung in Mitsystem und Gegensystem nach der Methode der symmetrischen Komponenten zugrunde und die Sollwerte sind Werte des Mitsystem, nämlich jeweils wenigstens eine auf das Mitsystem bezogene, einzuspeisende Blindleistung der jeweiligen Windenergieanlage und außerdem oder alternativ jeweils wenigstens eine auf das Mitsystem bezogene Ausgangs- oder Klemmenspannung der jeweiligen Windenergieanlage und außerdem oder alternativ jeweils wenigstens eine auf das Mitsystem bezogene einzuspeisende Wirkleistung der jeweiligen Windenergieanlage, insbesondere eine maximal einzuspeisende Wirkleistung.

Über die Vorgabe der einzuspeisenden Blindleistung und/oder der einzuspeisenden Wirkleistung kann eine wichtige, netzstützende bzw. die Netzstabilität beeinflussende Größe vorgegeben werden. Durch eine entsprechende Blindleistung kann insbesondere ein Spannungsabfall in einer langen Zuleitung zum oder langen Leitung im Wechselspannungsnetz behoben oder verringert werden.

Einer drohenden Instabilität aufgrund eines sehr geringen Kurzschlussstromverhältnisses, also auch aufgrund einer vergleichsweise großen Anschlussleistung kann mit einer Reduzierung der eingespeisten Wirkleistung begegnet werden. Die Vorgabe einer maximalen einzuspeisenden Wirkleistung ist insbesondere auch deswegen vorgesehen, weil der vorherrschende Wind zumindest dauerhaft die einzuspeisende Wirkleistung begrenzt und daher ein konkreter, eine solche Grenze übersteigender Wirkleistungssollwert nicht umgesetzt werden kann.

Vorteilhaft ist aber auch eine kombinierte und aufeinander abgestimmte Vorgabe der einzuspeisenden Wirkleistung und der einzuspeisenden Blindleistung, weil insbesondere auch ein durch Wirkleistung und Blindleistung bestimmter Arbeitspunkt wichtig für die Stabilität des Windparks beim Einspeisen ist.

Durch die Zugrundelegung der Methode der symmetrischen Komponente kann auch ein unsymmetrisches 3-phasiges System Berücksichtigung finden. Im Idealfall ergeben sich die Komponenten des Gegensystems zu 0, wenn nämlich das 3-phasige System symmetrisch ist.

Erfindungsgemäß wird vorgeschlagen, dass eine Stabilitätsgrenze vorausberechnet wird, welche eine Grenze zwischen stabilen und instabilen Arbeitspunkten bildet, und welche für die Steuerung hinterlegt wird, insbesondere dass sie in der Zentralsteuereinheit als Kennfeld hinterlegt wird. Eine solche Stabilitätsgrenze kann bspw. ein Kennfeld oder graphisch dargestellt eine Kennlinie sein, die aus mehreren Blindleistungs-Wirkleistungs-Wertepaaren gebildet wird. Entsprechend werden Sollwerte für Blindleistung und Wirkleistung so vorgegeben, dass sich ein Arbeitspunkt, der aus Blindleistung und Wirkleistung definiert ist, immer nur auf einer, nämlich der stabilen Seite dieser Stabilitätsgrenze befindet.

Eine solche Stabilitätsgrenze ist insbesondere eine Eigenschaft des angeschlossenen Netzes bezogen auf den Netzeinspeisepunkt. Entsprechend wird vorzugsweise vorgeschlagen, dass angeschlossene Wechselspannungsnetz soweit zu vermessen oder anderweitig zu identifizieren, um eine solche Stabilitätsgrenze zu ermitteln. Ist eine solche Stabilitätsgrenze ermittelt und hinterlegt, kann ein stabiler Arbeitspunkt entsprechend einfach und/oder zuverlässig eingestellt werden oder ein eingestellter Arbeitspunkt überwacht werden. Die Steuerung des Windparks, nämlich der Einspeisung am Netzanschlusspunkt ist dann nicht oder zumindest weniger darauf angewiesen, aufgrund von plötzlich erfassten dynamischen Vorgängen insbesondere am Netzanschlusspunkt einen drohenden Stabilitätsverlust zu erfassen. Vielmehr kann vorher schon erkannt werden, wo und evtl. auch wann ein Stabilitätsverlust eintreten würde, wenn nicht Gegenmaßnahmen ergriffen werden. Dabei können etwaige abrupte Gegenmaßnahmen bzw. radikale Gegenmaßnahmen vermieden werden, wenn ein Arbeitspunkt sicher eingestellt wird. Vorzugsweise kann ein solcher Arbeitspunkt durch die eingespeiste Wirkleistung und eingespeiste Blindleistung definiert sein und vorzugsweise wird entsprechend die einzuspeisende Wirkleistung und die einzuspeisende Blindleistung entsprechend begrenzt und/oder ein entsprechender Arbeitspunkt eingestellt. Vorzugsweise wird ein solcher Arbeitspunkt so eingestellt bzw. so begrenzt, dass ein Sicherheitsabstand zwischen dem Arbeitspunkt und der Stabilitätsgrenze eingestellt und eingehalten wird.

Gemäß einer weiteren Ausgestaltung wird vorgeschlagen, dass aus Messungen am Netzeinspeisepunkt Kenngrößen des Netzeinspeisepunktes bzw. Kenngrößen des Wechselspannungsnetzes bezogen auf den Netzeinspeisepunkt abgeglichen werden, um daraus Eigenschaften des Wechselspannungsnetzes zu beurteilen. Insbesondere werden hier die am Netzeinspeisepunkt erfasste Spannung und/oder der am Netzeinspeisepunkt erfasste Strom verwendet. Eine Kenngröße kann hierbei eine Sensitivität des Netzes auf Einspeisegrößen sein. Eine solche Sensitivität ist eine Änderung der Spannung am Netzanschlusspunkt bezogen auf eine Änderung der eingespeisten Leistung. Insbesondere kann sie berechnet werden aus der Summe der Änderung der Spannung in Abhängigkeit der Änderung der eingespeisten Wirkleistung und der Änderung der Spannung in Abhängigkeit der Änderung der eingespeisten Blindleistung. Mit anderen Worten berechnet sich hier die Sensitivität aus einer partiellen Ableitung der Spannung nach der Wirkleistung einerseits und nach der Blindleistung andererseits. Aus dieser Sensitivität, die auch als Netzsensitivität bezeichnet werden kann und sich auf den Netzanschlusspunkt bezieht, lässt sich möglicherweise auch ein drohender Stabilitätsverlust oder zumindest eine Schwächung der Stabilität des Netzes erkennen. Außerdem oder alternativ wird vorgeschlagen, hieraus auch die Qualität und insbesondere Stabilität des Arbeitspunktes des Windparks bzw. der Arbeitspunkte der Windenergieanlagen beurteilen. Darauf basierend kann ggf. steuernd eingegriffen werden.

Vorzugsweise wird vorgeschlagen, dass Netzsensitivitäten durch eine vorab durchgeführte Netzanalyse aufgenommen und abgespeichert werden und außerdem dass Netzsensitivitäten zu einem aktuellen Arbeitspunkt erfasst werden. Eine Steuerung, Vorgabe und/oder Veränderung wenigstens eines Sollwertes erfolgt dann abhängig von einem Vergleich der aktuellen Netzsensitivitäten mit den vorab aufgenommenen Netzsensitivitäten. Insbesondere wird ein Sollwert für die einzuspeisende Wirkleistung reduziert, wenn bei dem Vergleich eine Abweichung einen vorbestimmten Grenzwert überschreitet. Die Netzsensitivitäten sind Reaktionen des Netzes auf Veränderungen, insbesondere Veränderungen der Einspeisung. Hier wird insbesondere die Berücksichtigung einer Netzsensitivität als Reaktion auf eine Änderung der eingespeisten Wirkleistung und eine Netzsensitivität als Reaktion auf eine Änderung der eingespeisten Blindleistung berücksichtigt. Diese beiden Netzsensitivitäten können auch zusammengefasst oder zusammengefasst betrachtet werden. Eine solche Netzsensitivität ist eine Netzeigenschaft und kann daher vorab aufgenommen und hinterlegt werden. Sie kann helfen frühzeitig Instabilitäten zu erkennen und zu vermeiden. Insbesondere eine hohe Netzsensitivität bedeutet, dass das Netz sehr stark, also sehr empfindlich schon auf kleine Änderungen reagiert. Daran kann die Regelung, was gemäß einer Ausführungsform vorgeschlagen wird, angepasst werden.

Außerdem ist zu beachten, dass sich auch Bedingungen im Netz verändern können bzw. Randbedingungen Einfluss auf die Netzsensitivität haben können. Durch einen Vergleich aktuell aufgenommener Netzsensitivitäten mit entsprechender vorab bestimmter Netzsensitivitäten kann erkannt werden, ob sich das Netz noch so verhält, wie zuvor ermittelt wurde, oder ob mit einem abweichenden Verhalten gerechnet werden muss. Im letzteren Fall kann Vorsicht geboten sein, weil die Regelungs- bzw. Steuerungsvorgaben evtl. nicht mehr ausreichen, zumindest nicht mehr optimal an das Netz angepasst sind. Für diesen Fall kann die Reduzierung der Wirkleistung die eingespeist wird, eine erste Schutzmaßnahme sein. Insbesondere kann hierdurch ein Abstand des Arbeitspunktes zur Stabilitätsgrenze erhöht werden.

Gemäß einer weiteren Ausführungsform wird vorgeschlagen, dass eine Veränderung eines Sollwertes für die einzuspeisende Blindleistung und/oder für die einzuspeisende Wirkleistung sprunghaft bzw. mit einer Stufe oder mehreren Stufen erfolgt. Hierdurch wird zum Einen eine starke Änderung mit entsprechend starker Auswirkung erreicht. Außerdem kann eine stufenweise Änderung auch dazu führen, dass seltener eine Änderung vorgenommen werden muss, insbesondere dass nicht ständig die einzuspeisende Wirkleistung und/oder einzuspeisende Blindleistung verändert wird. Vorzugsweise erfolgt eine solche sprunghafte oder stufenweise Veränderung mit einer vorbestimmten zeitlichen Verzögerung.

Gemäß einer Ausgestaltung wird zudem vorgeschlagen, basierend auf einer Reaktion der Spannung des Netzes am Netzanschlusspunkt auf eine solche sprunghafte Änderung eine aktuelle Netzsensitivität zu bestimmen. Hierbei kann die Netzsensitivität durch eine Differenzbildung erfolgen, nämlich indem zu einem Zeitpunkt vor der sprunghaften Änderung und einem Zeitpunkt nach der sprunghaften Änderung sowohl die Spannung als auch die sprunghaft geänderte Wirkleistung bzw. Blindleistung erfasst wird und diese beiden Differenzen ins Verhältnis gesetzt werden.

Gemäß einer Ausführung wird zudem vorgeschlagen, dass ein Hysterese-Regler zum Vorgeben der einzustellenden Sollwerte verwendet wird. Unter einem Hysterese-Regler ist ein Regler zu verstehen, dessen Ausgang, also Stellgröße wie hier die Vorgabe der Sollwerte, nicht in einem direkten und eindeutigen Zusammenhang mit einer entsprechenden Eingangsgröße steht, sondern auch von vorherigen Werten abhängt. Bildet bspw., was hier nur allgemeine beispielhafte Erläuterung dienen soll, eine Spannung den Eingang des Reglers und eine Blindleistung den Ausgang des Reglers, so kann eine Erhöhung der Spannung über ihren Sollwert bspw. zu einer Erhöhung der Blindleistung führen. Kehrt die Spannung wieder zu ihrem Sollwert oder zumindest in den Bereich zurück, kann die Blindleistung dennoch, zumindest vorübergehend, ihren Wert beibehalten. Ebenso kann ein vorgeschlagener Hysterese-Regler auch eine Zeitverzögerung beinhalten, so dass, um das genannte Beispiel nochmals zur Veranschaulichung aufzugreifen, eine Spannungsüberhöhung zunächst nicht zu einer Reaktion des Reglers führt, sondern erst nach einem gewissen Zeitablauf. Liegt vor diesem Zeitablauf die Spannungserhöhung aber nicht mehr vor, erfolgt auch keine Reaktion am Ausgang des Reglers. Insbesondere ist ein Hysterese-Regler auch ein nichtlinearer Regler. Rein vorsorglich wird darauf hingewiesen, dass jedenfalls ein Regler, dessen Übertragungsverhalten amplitudenabhängig ist, ein nicht-linearer Regler ist.

Außerdem oder alternativ wird vorgeschlagen, dass das Verfahren zum Steuern des Windparks dadurch gekennzeichnet ist, dass eine Veränderung wenigstens eines der Sollwerte erfolgt, wenn eine Zustandsgröße im Netz ein vorbestimmtes Kriterium erfüllt und wenn danach eine vorbestimmte Totzeit abgelaufen ist und das vorbestimmte Kriterium nachwievor erfüllt ist. Es geht hierbei insbesondere um die Netzspannung am Netzanschlusspunkt und das Erfüllen des vorbestimmten Kriteriums kann hier das Überschreiten eines vorbestimmten Grenzwertes bzw. das Unterschreiten desselben oder eines anderen vorbestimmten Grenzwertes sein bzw. ein Überschreiten dem Betrage nach. Auch kommt als Kriterium in Betracht, dass die relevante Größe, insbesondere die Netzspannung, ein Toleranzband verlässt.

Vorzugsweise wird vorgeschlagen, dass bei der Vorgabe der Sollwerte die Impedanz wenigstens einer Zuleitung von einer Windenergieanlage zum Netzanschlusspunkt berücksichtigt wird, um einen auf der Zuleitung zu erwartenden Spannungsabfall zu berücksichtigen. Hierbei kann insbesondere auch eine Impedanz eine Leitung zum Netzanschlusspunkt hin berücksichtigt werden, wenn dieser auch vom Windpark selbst weit entfernt ist. Gerad in einem solchen Fall kann diese Impedanz von der Windenergieanlage zum Netzanschlusspunkt für viele Windenergieanlagen im Park ähnlich sein und vereinfachend als identisch angenommen werden. Sollwerten der Windenergieanlage, nämlich insbesondere für die einzuspeisende Blindleistung und Wirkleistung und damit im Ergebnis für die einzuspeisenden Ströme, liegt dann vorzugsweise eine virtuellen Spannung an der Windenergieanlage zugrunde. Vorzugsweise wird hier eine Ausgangsspannung als virtuelle Spannung zugrundegelegt, die um einen Spannungsabfall bedingt durch die effektive Impedanz von der Zuleitung zum Netzanschlusspunkt hervorgerufen wird bzw. zu erwarten ist.

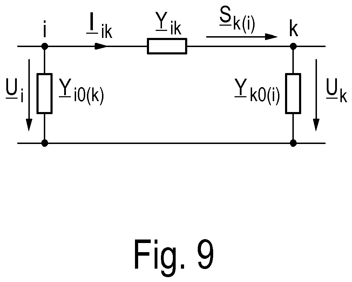

Eine nachfolgend beschriebene Lastflussrechnung wird für die Analyse von stationären Betriebszuständen von Energieversorgungsnetzen verwendet. Grundlage bildet dabei eine Abbildung (Fig. 9) des betreffenden Netzes durch seine Impedanzen Z bzw. Admittanzen Y (komplexe Leitwerte).

Fig. 9

In der klassischen Netzanalyse würde das Netz bestimmt werden durch das "ohmsche Gesetz" mit dem folgenden linearen Gleichungssystem in Matrix-Schreibweise, das einen Zusammenhang für n Knoten beschreibt.

$$\begin{bmatrix} \underline{Y}_{11} & \cdots & \underline{Y}_{12} & \underline{Y}_{1i} & \cdots & \underline{Y}_{1n} \\ \underline{Y}_{21} & \cdots & \underline{Y}_{22} & \underline{Y}_{2i} & \cdots & \underline{Y}_{2n} \\ & \cdot & & \cdot & & \cdot \\ & \cdot & & \cdot & & \cdot \\ & \cdot & & \cdot & & \cdot \\ \underline{Y}_{n1} & \cdots & \underline{Y}_{n2} & \underline{Y}_{ni} & \cdots & \underline{Y}_{nn} \end{bmatrix} \begin{bmatrix} \underline{U}_1 \\ \underline{U}_2 \\ \cdot \\ \cdot \\ \cdot \\ \underline{U}_n \end{bmatrix} = \begin{bmatrix} \underline{I}_1 \\ \underline{I}_2 \\ \cdot \\ \cdot \\ \cdot \\ \underline{I}_n \end{bmatrix}$$

oder kurz: $\underline{Y} \cdot \underline{U} = \underline{I}$ (lineares Gleichungssystem).

Gesucht sind dabei die Spannungen an jedem der n Netzknoten ($\rightarrow$Spannungshaltung).

Da aber die Ströme in den Netzen unbekannt sind, aber die (geplanten) Einspeisungen bzw. Abnahmen bekannt, werden die Ströme durch Leistungen ausgedrückt.

$$\underline{I}_{ii} = \frac{\underline{S}_i^*}{\underline{U}_i^*} = \frac{P_i - jQ_i}{\underline{U}_i^*}$$

Durch die Darstellung der Netzgleichungen über Leistungen entsteht jetzt ein nichtlineares Gleichungssystems.

$$\underline{S}_i^* = P_i - jQ_i = \underline{Y}_{i1}\underline{U}_1\underline{U}_i^* + \underline{Y}_{i2}\underline{U}_2\underline{U}_i^* \ldots = \underline{U}_i^* \sum_{k=1}^{n} \underline{Y}_{ik}\underline{U}_k$$

Gelöst wird dieses nichtlineare Gleichungssystem numerisch (meist mit einem Newton Verfahren). Im Rahmen der numerischen Lösung des Gleichungssystems, muss dieses linearisiert werden. Die Linearisierung erfolgt durch die partiellen Ableitungen der Matrixelemente nach den Unbekannten, nämlich hier noch der Amplitude ($U_2$...$U_n$ und dem Winkel ($\delta_2$...$\delta_n$) der Knotenspannungen.

Die Matrix mit den partiellen Ableitungen wird Jacobi- Matrix genannt. Zur Lösung des GS muss diese invertierbar also regulär sein.

$$
\begin{bmatrix} \Delta P_2^{(0)} \\ \vdots \\ \Delta P_n^{(0)} \\ \vdots \\ \Delta Q_2^{(0)} \\ \vdots \\ \Delta Q_n^{(0)} \end{bmatrix}
=
\left[
\begin{array}{ccc|ccc}
\left(\frac{\partial P_2}{\partial \delta_2}\right)^{(0)} & \cdots & \left(\frac{\partial P_2}{\partial \delta_n}\right)^{(0)} & \left(\frac{\partial P_2}{\partial U_2}\right)^{(0)} & \cdots & \left(\frac{\partial P_2}{\partial U_n}\right)^{(0)} \\
\vdots & & \vdots & \vdots & & \vdots \\
\left(\frac{\partial P_n}{\partial \delta_2}\right)^{(0)} & \cdots & \left(\frac{\partial P_n}{\partial \delta_n}\right)^{(0)} & \left(\frac{\partial P_n}{\partial U_2}\right)^{(0)} & \cdots & \left(\frac{\partial P_n}{\partial U_n}\right)^{(0)} \\
\vdots & & \vdots & \vdots & & \vdots \\
\left(\frac{\partial Q_2}{\partial \delta_2}\right)^{(0)} & \cdots & \left(\frac{\partial Q_2}{\partial \delta_n}\right)^{(0)} & \left(\frac{\partial Q_2}{\partial U_2}\right)^{(0)} & \cdots & \left(\frac{\partial Q_2}{\partial U_n}\right)^{(0)} \\
\vdots & & \vdots & \vdots & & \vdots \\
\left(\frac{\partial Q_n}{\partial \delta_2}\right)^{(0)} & \cdots & \left(\frac{\partial Q_n}{\partial \delta_n}\right)^{(0)} & \left(\frac{\partial Q_n}{\partial U_2}\right)^{(0)} & \cdots & \left(\frac{\partial Q_n}{\partial U_n}\right)^{(0)}
\end{array}
\right]
\begin{bmatrix} \Delta \delta_2^{(0)} \\ \vdots \\ \Delta \delta_n^{(0)} \\ \vdots \\ \Delta U_2^{(0)} \\ \vdots \\ \Delta U_n^{(0)} \end{bmatrix}
$$

Jacobi- Matrix

Nachfolgend wird die Erfindung anhand von Ausführungsformen exemplarisch unter Bezugnahme auf die begleitenden Figuren näher erläutert.

Fig. 1 zeigt eine Windenergieanlage in einer perspektivischen Ansicht.

Fig. 2 zeigt schematisch eine an ein Netz angeschlossene Windenergieanlage, basierend auf einem Spannungssteuersystem, das auch als "Voltage Control System" oder kurz VCS bezeichnet wird.

Fig. 3 zeigt schematisch eine Schaltungsanordnung einer spannungsgesteuerten Einspeisung einer Windenergieanlage in ein Wechselspannungsnetz.

Fig. 4 zeigt schematisch zwei über einen gemeinsamen Netzanschlusspunkt an ein Netz angeschlossene Windenergieanlage.

Fig. 5 veranschaulicht Einflussgrößen, die die Sensitivität einer an ein Netz angeschlossenen Windenergieanlage beeinflussen können.

Fig. 6 zeigt ein Diagramm als Auswertung des Verhaltens eines Netzes am Netzanschlusspunkt als Spannungsverläufe in Abhängigkeit der eingespeisten Blindleistung und eingespeisten Wirkleistung.

Fig. 7 zeigt eine Sensitivität als durch Änderungen der Wirkleistung bedingte Spannungsänderung in Abhängigkeit der eingespeisten und normierten Blindleistung und Wirkleistung.

Fig. 8 zeigt eine Sensitivität als durch Änderung der Blindleistung bedingte Spannungsänderung in Abhängigkeit der normierten Blindleistung und Wirkleistung.

Fig. 9 zeigt eine verallgemeinerte Netzabbildung.

Fig. 10 zeigt schematisch eine Regelungsstruktur für einen Windpark einschließlich einer zentralen Steuereinheit und exemplarisch eine Anlagensteuereinheit.

Fig. 11 zeigt schematisch die Struktur der in Fig. 10 auch gezeigten Zentralsteuereinheit.

Fig. 12    zeigt schematisch einen in der Zentralsteuereinheit der Fig. 11 enthaltenen Untersteuerblock.

Fig. 13    zeigt schematisch eine auch in der Fig. 10 gezeigte Anlagensteuereinheit.

Nachfolgend können identische Bezugzeichen für ähnliche aber nicht identische Elemente vorgesehen sein oder sie können auch für Elemente vorgesehen sein, die nur schematisch oder symbolisch dargestellt sind und sich in Details unterscheiden können, die für die jeweilige Erläuterung aber nicht relevant sind.

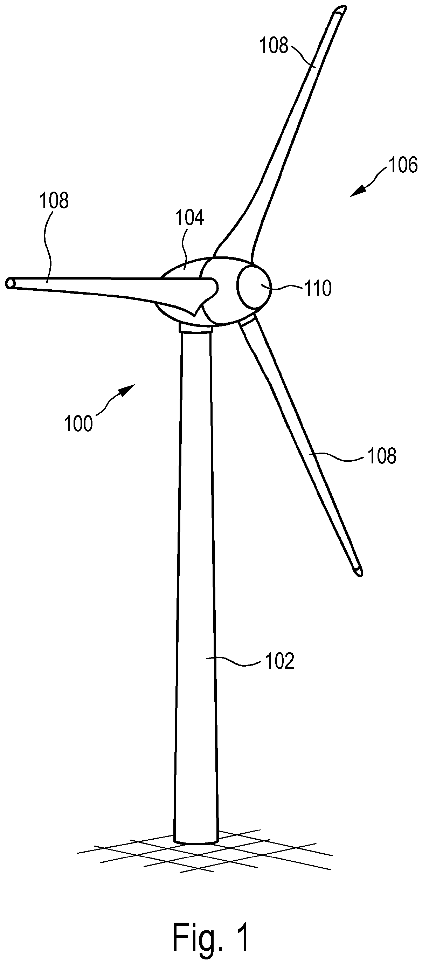

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

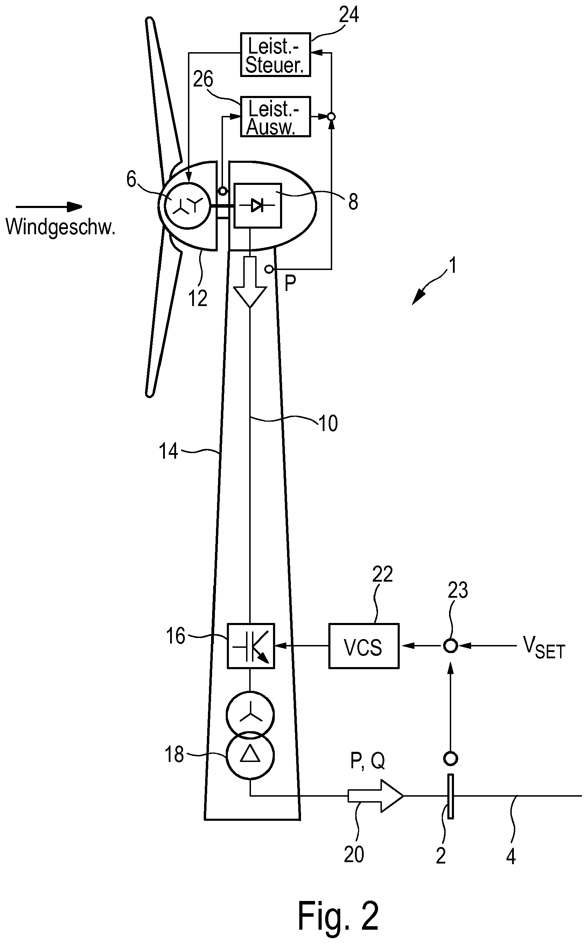

Fig. 2 zeigt schematisch eine Windenergieanlage 1, die über einen Netzanschlusspunkt 2 an ein elektrisches Versorgungsnetz 4 angeschlossen ist. Das elektrische Versorgungsnetz 4 wird vereinfachend auch als Netz 4 oder Netzwerk 4 nachfolgend bezeichnet, wobei diese Begriffe als Synonyme anzusehen sind.

Die Windenergieanlage 1 weist einen Generator 6 auf, der durch den Wind betrieben wird und dadurch elektrische Energie erzeugt. Der Generator 6 ist in einer Ausführungsform als elektrisch erregter Mehrphasen-Synchrongenerator 6 mit zwei jeweils sternförmig verschalteten 3-Phasensystemen ausgebildet, was durch die beiden Sternsymbole in dem Generator 6 der Fig. 2 veranschaulicht wird. Der so erzeugte Wechselstrom, nämlich in dem genannten Beispiel 6-phasige Wechselstrom, wird mit einem Gleichrichter 8 gleichgerichtet und als Gleichstrom über eine entsprechende Gleichstromleitung 10, die mehrere Einzelleitungen umfassen kann, von der Gondel 12 den Turm 14 herunter zu einem Wechselrichter 16 übertragen. Der Wechselrichter 16 erzeugt aus dem Gleichstrom einen Wechselstrom, nämlich in dem gezeigten Beispiel einen 3-phasigen Wechselstrom zum Einspeisen in das Netz 4. Hierzu wird die vom Wechselrichter 16 erzeugte Wechselspannung noch mittels eines Transformators 18 hochtransformatiert, um dann am Netzanschlusspunkt 2 in das Netz 4 eingespeist zu werden. Der gezeigte Transformator 18 verwendet eine Stern-Dreiecksschaltung, nämlich primärseitig eine Sternschaltung und sekundärseitig eine Dreiecksschaltung, was hier nur als ein Beispiel einer Ausführungsform dargestellt ist. Die Einspeisung in das Netz 4 kann neben der Einspeisung von Wirkleistung P auch die Einspeisung von Blindleistung Q beinhalten, was durch den Wirkpfeil 20 veranschaulicht wird. Für die konkrete Einspeisung wird der Wechselrichter 16 durch eine entsprechende Steuereinheit 22 angesteuert, wobei die Steuereinheit 22 auch baulich mit dem Wechselrichter 16 vereint sein kann. Überhaupt soll die Fig. 2 den grundsätzlichen Wirkaufbau veranschaulichen und die konkrete Anordnung einzelner Elemente kann auch anders als dargestellt gewählt werden. Bspw. kann der Trafo 18 außerhalb des Turms 14 vorgesehen sein.

Die Steuereinheit 22 steuert den Wechselrichter 16 insbesondere so an, dass die Art und Weise der Einspeisung in das Netz 4 gesteuert wird. Dabei werden Aufgaben wahrgenommen wie den einzuspeisenden Strom an die Situation im Netz 4, insbesondere Frequenz, Phase und Amplitude der Spannung im Netz 4 anzupassen. Außerdem ist die Steuereinheit 22 dazu vorgesehen, den Anteil von Wirkleistung P und Blindleistung Q der aktuell in das Netz 4 eingespeisten Leistung zu steuern. Hier werden Messungen im Netz 4, insbesondere am Netzanschlusspunkt 2 vorgenommen und entsprechend ausgewertet. Unter anderem wird auch die aktuelle Spannung im Netz 4, insbesondere in Form des aktuellen Effektivwertes der Spannung, gemessen und mit einem Vorgabewert für die Spannung, nämlich dem Vorgabewert $V_{SET}$ verglichen.

Entsprechend stellt das dargestellte System und insbesondere der Wechselrichter 16 mit der Steuereinheit 22 ein Spannungssteuersystem dar, das auch im deutschen Sprachgebrauch als "Voltage Control System", abgekürzt VCS, bezeichnet wird.

Für die Steuerung des Generators der Windenergieanlage sind im Bereich der Gondel ein Leistungssteuerblock 24 und ein Leistungsauswerteblock 26 vorgesehen. Der Leistungssteuerblock 24 steuert insbesondere die Erregung, nämlich den Erregerstrom, des fremderregten Synchrongenerators im Beispiel der gezeigten Ausführung. Der Leistungsauswerteblock 26 wertet die dem Gleichrichter 8 zugeführte Leistung aus und vergleicht sie mit der vom Gleichrichter 8 über die Gleichstromleitungen 10 zum Wechselrichter 16 abgegebene Leistung. Das Ergebnis dieser Auswertung wird weiter an den Leistungssteuerblock 24 gegeben.

Die Fig. 2 veranschaulicht auch, dass für eine entsprechend intelligente Einspeisung das gezeigte System mit einem Spannungssteuersystem versehen sein sollte, um die Windenergieanlage beim Einspeisen möglichst stabil zu betreiben, insbesondere in der Nähe einer Stabilitätsgrenze zu betreiben.

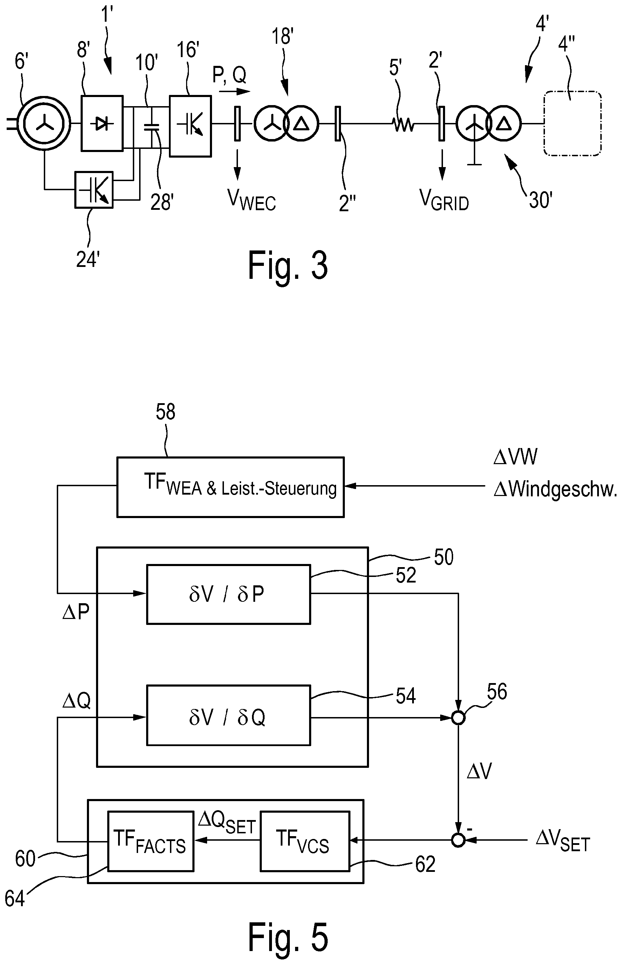

Fig. 3 veranschaulicht den Anschluss einer Windenergieanlage 1' an ein sog. "schwaches Netz 4". Unter einem schwachem Netz ist hier ein Netz mit hoher Impedanz zu verstehen. Das wird in der Fig. 3 durch eine Serien-Impedanz 5' veranschaulicht. Außerdem ist eine solche Serien-Impedanz 5' in einem Testaufbau vorgesehen gewesen, der der Struktur der Fig. 3 entspricht und mit dem das Verhalten der Windenergieanlage 1' an dem schwachen Netz 4' untersucht wurde.

Die Struktur der Fig. 3 geht von einem Generator 6' aus, der vom Wind angetrieben wird und als Synchrongenerator vorgesehen ist. Die erzeugte elektrische Leistung des Generators 6' wird in einem Gleichrichter 8' gleichgerichtet und einem Wechselrichter 16' eingangsseitig an einem Gleichspannungszwischenkreis mit einem Zwischenkreiskondensator 28' bereitgestellt. Die gezeigte Struktur setzt eine Gleichspannungsleitung 10' mit dem eingangsseitigen Gleichspannungszwischenkreis des Wechselrichters 16' gleich, um die Darstellung zu vereinfachen. Tatsächlich kann eine eingangsseitige Gleichstromleitung mit einem Zwischenkreis elektrisch identisch sein, oder es ist eingangsseitig noch ein Hochsetzsteller vorgesehen, was hier nicht im Detail ausgeführt wird. Auch kann der Gleichrichter 1' und der Wechselrichter 16' räumlich voneinander getrennt sein, wie bereits in der Fig. 2 zu dem Gleichrichter 8 und dem Wechselrichter 16 erläutert wurde.

Schließlich ist eine Erregersteuerung 24' vorgesehen, die aus Energie des Gleichspannungszwischenkreises, der durch den Zwischenkreiskondensator 28' repräsentiert wird, gespeist werden kann. Diese Erregersteuerung 24' steuert den Erregerstrom des fremderregten Generators 6' und entspricht im Grunde dem Leistungssteuerblock 24 der Fig. 2. Der Wechselrichter 16' kann Wirkleistung P und/oder Blindleistung Q einspeisen. Dabei ist in der Fig. 3 die Spannung am Ausgang des Wechselrichters 16' als Spannung der Windenergieanlage $V_{WEC}$ angegeben. Zur Einspeisung wird diese über den Transformator 18' hochtransformiert und am Netzanschlusspunkt 2' ins Netz 4' eingespeist. Das Netz 4' weist hier auch einen weiteren Netztransformator 30' auf. Das eigentliche Netz, das nach dem Netztrafo 30' beginnt, ist mit dem Bezugszeichen 4" gekennzeichnet. Die Spannung am Netzanschlusspunkt 2' wird als Netzspannung $V_{Grid}$ bezeichnet.

Zur Veranschaulichung des schwachen Netzes ist die Serien-Impedanz 5' vor dem Netzanschlusspunkt 2' eingezeichnet. Diese Serien-Impedanz 5' ist nur in diesem Testaufbau bzw. veranschaulichenden Aufbau vorhanden und gibt die Netzimpedanz an. Daher kann auch der unmittelbar neben dem Trafo 18' gezeichnete Punkt als Netzanschlusspunkt 2" angesehen werden. Die Unterscheidung zwischen diesen beiden Netzanschlusspunkten 2' und 2" ergibt sich nur durch diese Verwendung der Serien-Impedanz 5' und ist ansonsten in realen Netzen so nicht vorzufinden.

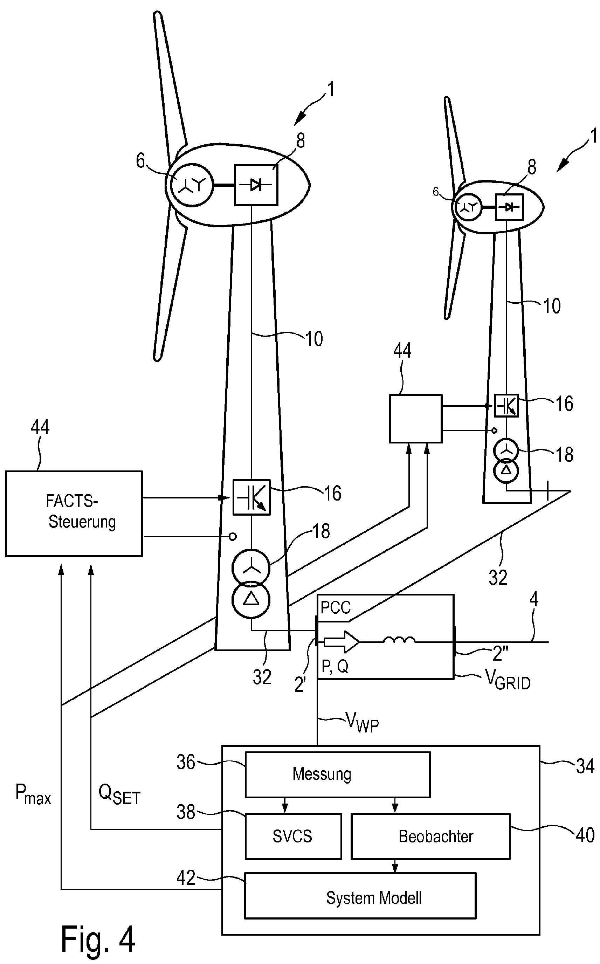

Fig. 4 zeigt eine weitere veranschaulichende und schematische Darstellung, gemäß der zwei Windenergieanlagen 1 an ein Versorgungsnetz 4 angeschlossen sind. Jede der Windenergieanlage 1 ist dabei dem Grunde nach wie in Fig. 2 erläutert aufgebaut, nämlich mit einem Generator 6, einem Gleichrichter 8 und einer Gleichstromleitung 10, die tatsächlich mindestens zwei einzelne Leitungen, nämlich für positiven und negativen Strom, aufweist, was entsprechend auch für die Gleichstromleitung 10 der Fig. 2 zutrifft. Weiterhin weist die Windenergieanlage 1 einen Wechselrichter 16 und einen Trafo 18 auf. Von jeder der beiden Windenergieanlagen 1 verläuft dann eine Anschlussleitung 32 zu einem bzw. dem windenergieanlagenseitigen Netzanschlusspunkt 2'. Somit speisen diese beiden exemplarisch gezeigten Windenergieanlagen 1, die auch repräsentativ für einen Windpark mit weit mehr als Windenergieanlagen stehen können, ihre erzeugte Leistung gemeinsam an diesem windenergieanlagenseitigem Netzanschlusspunkt 2' ein. Die eingespeiste Leistung P und eingespeiste Blindleistung Q, falls vorhanden, wird dann dem netzseitigen Anschlusspunkt 2' zugeführt und ins elektrische Versorgungsnetz 4 eingespeist.

Die Verbindung zwischen dem windenergieanlagenseitigen Netzanschlusspunkt 2' und dem netzseitigen Anschlusspunkt 2" ist nicht vernachlässigbar und entsprechend stellt sich eine windenergieanlagenseitige Spannung $V_{WP}$ am windenergieanlagenseitigen Netzanschlusspunkt 2' ein, wohingegen sich am netzseitigen Anschlusspunkt 2" die Spannung $V_{Grid}$ einstellt.

Zur Steuerung wird die windenergieanlagenseitige Spannung $V_{WP}$ erfasst und in einem Auswerteblock 34 ausgewertet. Die Auswertung erfolgt zunächst so, dass Messwerte mit dem Messblock 36 aufgenommen werden. Die Messergebnisse werden u.a. dem Stabilitätssteuerblock 38 zugeführt, der auch als SVCS-Block bezeichnet werden kann, wobei SVCS aus einer Abkürzung für den englischen Begriff "Stability Voltage Control System" abgeleitet ist. Der Stabilitätssteuerblock 38 berechnet eine Vorgabe für die bereitzustellende Blindleistung $Q_{Set}$. Diese einzustellende Blindleistung wird als entsprechender Vorgabewert an beide Windenergieanlagen 1 übergeben, und würde entsprechend an alle Windenergieanlagen in einem Betrag übergeben werden. Dieser Vorgabewert kann als Absolutwert übergeben werden, insbesondere dann, wenn die Windenergieanlagen 1 die gleiche Größe aufweisen und demselben Wind ausgesetzt sind. Es kann aber auch als Vorgabewert bspw. ein prozentualer Wert ausgegeben werden, der sich auf Eigenschaften der jeweiligen Windenergieanlage bezieht, wie bspw. die Nennleistung der betreffenden Windenergieanlage.

Weiterhin gibt der Messblock 36 Werte weiter an den Beobachterblock 40, der aus den ermittelten Messwerten weitere Zustände ermittelt, wie bspw. die eingespeiste Wirkleistung oder eingespeiste Blindleistung, und seine Ergebnisse weiter an den Systemmodelblock 42 weitergibt. Der Beobachterblock 40 kann ggf. auch Informationen über einen Leistungsbedarf ermitteln oder ableiten.

Das Systemmodel des Systemmodelblocks 42 wird dann dazu verwendet, eine maximal einzuspeisende Wirkleisung $P_{max}$ zu bestimmen und den Windenergieanlagen 1 zuzuleiten. Auch diese maximal einzuspeisende Wirkleistung kann als Absolutwert oder Relativwert ausgegeben werden. Es wird darauf hingewiesen, dass die Veranschaulichung des Auswerteblocks 34 die Struktur verdeutlichen soll. Grundsätzlich ist es nicht erforderlich, dass der Auswerteblock 34 körperlich als eigenständiges Gerät ausgebildet ist.

Die vorgegebene Blindleistung $Q_{set}$ und die maximale Wirkleisung $P_{max}$ werden dann an den FACTS-Steuerblock 44 jeder Windenergieanlage 1 gegeben. Die Bezeichnung "FACTS" ist auch im deutschen Sprachgebrauch üblich und ist eine Abkürzung für "Flexible AC Transmission System". Der FACTS-Steuerblock 44 setzt dann die Vorgabewerte um und steuert entsprechend den Wechselrichter 16 an, wobei er hierfür auch Messwerte von Zuständen aus der Windenergieanlage mit berücksichtigen kann.

Insbesondere, aber nicht nur, können stabilitätsrelevante Vorgaben für ein stabiles Einspeisen in das Netz 4 durch den Auswerteblock 34 realisiert werden. Insbesondere kann ein Arbeitspunkt vorgegeben werden, der hinsichtlich einzuspeisender Energiemenge bzw. Leistungshöhe und Stabilität günstig ist. Insbesondere kann ein Arbeitspunkt mit einer Stabilitätsreserve hierbei vorgegeben werden. Eine Stabilitätsreserve hinsichtlich einzuspeisender Blindleistung kann hierbei der Stabilitätssteuerblock 38 durch eine entsprechende Vorgabe der Blindleistung $Q_{set}$ erreichen.

Fig. 5 veranschaulicht die Sensitivität einer ans Netz angeschlossenen Windenergieanlage und die Einflussgrößen hierzu. Repräsentativ für das Verhalten des Netzes, nämlich am Netzanschlusspunkt ist der Netzblock 50 der Fig. 5 angegeben. Der Netzblock 50 veranschaulicht, dass das Netz durch eine Spannungsänderung auf Einflüsse reagieren kann. Als Einflüsse sind hier Änderungen der Wirkleistung $\Delta P$ und Änderung der Blindleistung $\Delta Q$ veranschaulicht. Den Einfluss von Leistungsänderungen berücksichtigt der Wirkleistungsblock 52 und den Einfluss von Änderungen der Blindleistung berücksichtigt der Blindleistungsblock 54. Der Wirkleistungsblock 52 zeigt eine partielle Ableitung der Spannung nach der Wirkleistung und entsprechend zeigt der Blindleistungsblock 54 eine partielle Ableitung der Spannung nach der Blindleistung. Das ist eine Möglichkeit, die jeweilige Dynamik des Netzverhaltens, also der Netzsensitivität, nämlich Reaktionen auf Änderungen der Wirkleistung und der Blindleistung über entsprechend partielle Ableitungen zu berücksichtigen, deren Ergebnis in dem Summierblock 56 aufaddiert werden. Der Netzblock 50 zusammen mit dem Summierblock 56 berücksichtigt somit eine Abhängigkeit der Spannung des Netzes am Netzanschlusspunkt von zwei Größen, nämlich von der Wirkleistung und von der Blindleistung. Die Abhängigkeit wird hier über die beiden partiellen Ableitungen berücksichtigt.

Änderungen der Wirkleistung ergeben sich insbesondere aus Änderungen der Windgeschwindigkeit $\Delta VW$, die auf den Windenergieanlagenblock 58 wirkt. Dieser Windenergieanlagenblock 58 verdeutlicht den Einfluss der Änderung der Windgeschwindigkeit $\Delta VW$ auf die Änderung der Wirkleistung $\Delta P$, wobei aber auch die Steuerung der Windenergieanlage berücksichtigt werden muss und mit diesem Block 58 berücksichtigt wird.

Die Änderung der Blindleistung $\Delta Q$ kann zwar auch von der Windenergieanlage, zumindest der Steuerung der Windenergieanlage abhängen, folgt aber anderen im Wesentlichen von der Windgeschwindigkeit unabhängigen Zusammenhängen. Ihre Änderung wird durch den Steuerungsblock 60 veranschaulicht. Dieser Steuerungsblock 60 ist dabei zur Erläuterung unterteilt in den Blindleistungsvorgabeblock 62 und den FACTS-Block 64. Der Steuerungsblock 60 und damit der Blindleistungsvorgabeblock 62 sind zunächst abhängig von einer Spannungsabweichung $\Delta V$, nämlich am Netzanschlusspunkt, abzüglich einer vorgegebenen Spannungsabweichung $\Delta V_{SET}$. Von dieser resultierenden Spannungsabweichung ausgehend, bestimmt der Blindleistungsvorgabeblock 62 eine einzuspeisende Blindleistung bzw. abhängig von einer Spannungsänderung eine vorgegebene Änderung der einzuspeisenden Blindleistung. Dies wird an den FACTS-Block 64 übergeben, der entsprechend eine Umsetzung der Einspeisung der Blindleistung bzw. der Änderung der Einspeisung der Blindleistung realisiert.

Der Windenergieanlagenblock 58 und der Steuerungsblock 60 können auch als Übertragungsfunktion der jeweiligen Eingangsgröße verstanden werden bzw. der Blindleistungsvorgabeblock 62 und der FACTS-Block 64 können jeweils als einzelne Übertragungsfunktionen verstanden werden, die in dem Steuerungsblock 60 verkettet sind.

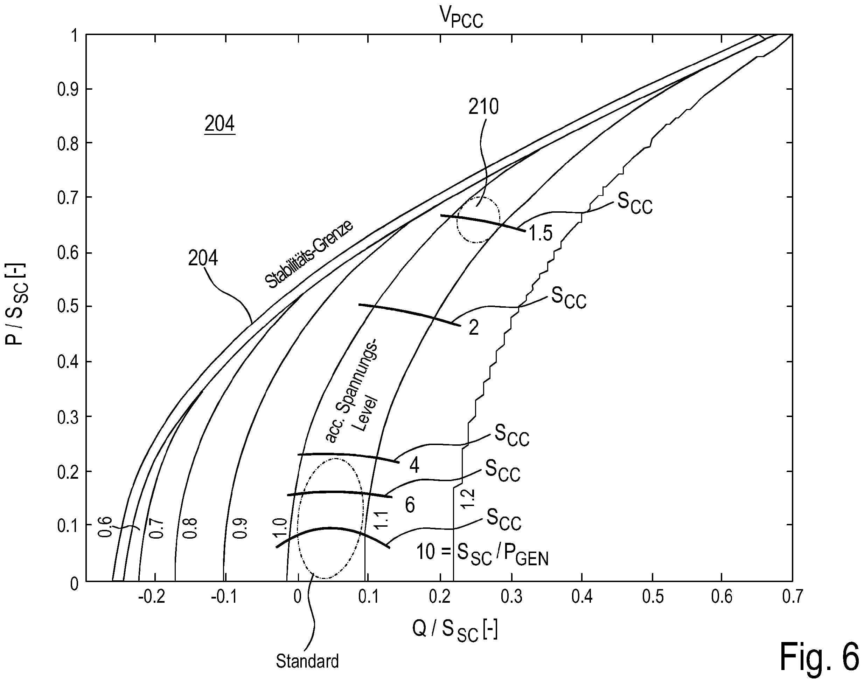

Fig. 6 zeigt für eine Ausführungsform eine Abhängigkeit der Spannung am Netzanschlusspunkt in Abhängigkeit der eingespeisten Blindleistung Q und der eingespeisten Wirkleistung P. Die Blindleistung Q ist auf die Kurzschlussleistung $S_{SC}$ des Netzes an dem untersuchten Netzanschlusspunkt normiert und an der Abszisse aufgetragen. Die Leistung P ist ebenfalls auf die Kurzschlussleistung $S_{SC}$ desselben Netzanschlusspunktes normiert und an der Ordinate aufgetragen. Die Spannung $V_{PCC}$ ist die Spannung am Netzanschlusspunkt normiert auf die Nennspannung $V_N$. Diese normierte Spannung am Netzanschlusspunkt ist für unterschiedliche Werte jeweils als Graph in Abhängigkeit der normierten Blindleistung Q und der normierten Wirkleistung P aufgetragen. Entsprechend ist der Graph bzw. die Kennlinie mit dem Wert 1 diejenige Kennlinie, die darstellt, bei welchen Werten für Blindleistung und Wirkleistung sich Nennspannung einstellt.

Bspw. stellt sich Nennspannung ein, wenn bezogen auf die Kurzschlussleistung $S_{SC}$ 10 % Blindleistung Q und 50 % Wirkleistung P eingespeist wird.

Die Graphik der Fig. 6 zeigt Eigenschaften eines Netzanschlusspunktes eines Netzes mit hoher Impedanz, jedenfalls bezogen auf diesen Netzanschlusspunkt.

Üblicherweise würde für den dargestellten Netzanschlusspunkt des beispielhaften Netzes eine Einspeisung etwa in dem Standardbetriebsbereich 200 erfolgen. Es würde also eine Einspeisung mit einer Wirkleistung P von etwa 10 % der Kurzschlussleistung $S_{SC}$ erfolgen mit Einspeisung von etwa 5 % Blindleistung der Kurzschlussleistung $S_{SC}$. Unter der idealisierenden Annahme, dass die eingespeiste Wirkleistung P der Nennleistung bzw. Anschlussleistung des Generators bzw. der Summe der an dem Netzanschlusspunkt angeschlossenen Generatoren entspricht, wäre die Einspeisung von 10 % der Kurzschlussleistung $S_{SC}$ gleichbedeutend damit, dass die Anschlussleistung $P_{Gen}$ 10% der Kurzschlussleistung $S_{SC}$ beträgt. Es liegt also ein Kurzschlussstromverhältnis Scr = $S_{SC}/P_{Gen}$ von etwa 10 vor. Das entspricht etwa dem Mittelpunkt des dargestellten Standardbetriebsbereichs 200. In der Fig. 6 sind zur Orientierung weitere Kurzschlussstromverhältnisse Scr als kurze Striche eingezeichnet, nämlich für die Werte für Scr von 10; 6; 4;

2 und 1, 5.

Erfindungsgemäß wird aber vorgeschlagen, deutlich mehr Wirkleistung P einzuspeisen, nämlich im Bereich von 60 bis 70 % der Kurzschlussleisung $S_{SC}$. Entsprechend ist hierfür die Einspeisung von 20 bis 30 % Blindleistung Q bezogen auf die Kurzschlussleistung $S_{SC}$ vorzusehen, um die Spannung am Netzanschlusspunkt im Bereich von 100 bis 110 % der Nennspannung zu halten. Es wird hier vorsorglich darauf hingewiesen, dass das Einspeisen von 110 % der Nennspannung am Netzanschlusspunkt nicht bedeutet, dass am Verbraucher eine erhöhte Spannung von 110 % messbar ist. Zum Einen liegt üblicherweise noch ein nicht zu vernachlässigender Netzabschnitt zwischen Netzanschlusspunkt und erstem relevanten Verbraucher, zum Anderen können im Netz auch bspw. Stufentransformatoren vorgesehen sein, die in gewissen Grenzen einen Ausgleich vornehmen können. Auf die hier sich anschließenden Maßnahmen, die sehr individuell vom Netz einschließlich Verbraucher und Erzeuger und diversen anderen Randbedingungen abhängen, kann im Rahmen dieser Anmeldung nicht eingegangen werden. Die notwendigen Maßnahmen sind dem Fachmann grundsätzlich geläufig.

Dieser vorgeschlagene Bereich ist in der Fig. 6 als erhöhter Betriebsbereich 210 eingezeichnet. Bei diesem erhöhten Betriebsbereich liegt etwa ein Kurzschlussstromverhältnis Scr von 1,5 vor. Bei einem solchen Kurzschlussstromverhältnis wurde bisher kein nennenswerter Erzeuger an das Netz angeschlossen.

Die Darstellung der Fig. 6 ist das Ergebnis einer Netzanalyse des zugrundeliegenden Netzes bezogen auf den betrachteten Netzanschlusspunkt. Hierfür wurde, wie eingangs erläutert wurde, eine Analyse der relevanten Elemente im Netz vorgenommen und jeweils durch Lösen der Jacobi-Matrix ermittelt. Dabei ergibt sich die vorliegende Darstellung der Fig. 6, demnach vereinfacht ausgedrückt die Kennlinien nach rechts, also mit höherer eingespeister Blindleistung Q auch zunehmende Spannungen am Netzanschlusspunkt wiedergeben. Mit abnehmender Blindleistung Q, also nach links, nimmt die Spannung am Netzanschlusspunkt ab. Dabei kann die Blindleistung Q nicht beliebig abnehmen und bei zu kleiner (bereits negativer) Blindleistung Q, wird, je nach zugehöriger Wirkleistung P, die Jacobi-Matrix singulär, also im mathematischen Sinne nicht lösbar. Eine singuläre Jacobi-Matrix bedeutet, dass ein instabiler Zustand vorliegt. Entsprechend ergibt sich eine Stabilitätsgrenze 202, die entsprechend am linken Rand der Darstellung der Fig. 6 eingezeichnet ist. Der Bereich, der links von der Stabilitätsgrenze 202 liegt, also jeweils eine höhere Wirkleistung P und/oder eine niedrigere Blindleistung Q aufweist, ist der instabile Bereich 204. Rein vorsorglich wird darauf hingewiesen, dass die Stabilitätsgrenze 202 nicht mit einer einzelnen Kennlinie eines Spannungswertes am Netzanschlusspunkt zusammenfällt, sondern vielmehr die Kennlinienscharr zu schneiden scheint. Tatsächlich kann die Kennlinienscharr nicht geschnitten werden, weil jenseits der Stabilitätsgrenze 202 keine Werte und damit auch Kennlinienscharr vorliegen.

Der nun bevorzugte Betriebsbereich, nämlich der erhöhte Betriebsbereich 210, hat zunächst einmal einen geringeren Abstand zu Stabilitätsgrenze 202, als der Standardbetriebsbereich 200. Dabei ist aber zu beachten, dass bisher konkrete Überlegungen und Analysen hinsichtlich der Netzeigenschaften, wie sie die Fig. 6 wiedergibt, nicht vorgenommen wurden. Insbesondere war nicht oder zumindest nicht in der gezeigten Qualität und gezeigten Quantität der Fig. 6 der Abstand zu einer Stabilitätsgrenze, wie sie in Fig. 6 als Stabilitätsgrenze 202 eingezeichnet ist, bekannt. Vielmehr hat man sich bei der Installation von Großkraftwerken an dem Kriterium des Kurzschlussstromverhältnisses orientiert und dieses möglichst groß, vorzugsweise über oder sogar deutlich über 10 gewählt. Kleine Erzeuger wie Windenergieanlagen wiederum sind bisher üblicherweise an starke Netze angeschlossen worden, die ohne Weiteres den Anschluss einer weiteren Windenergieanlage verkraften konnten. Im Ergebnis erfolgte auch da ein Anschluss, sei es nun gewollt oder ungewollt, mit hohem Kurzschlussstromverhältnis $S_{SC}$.

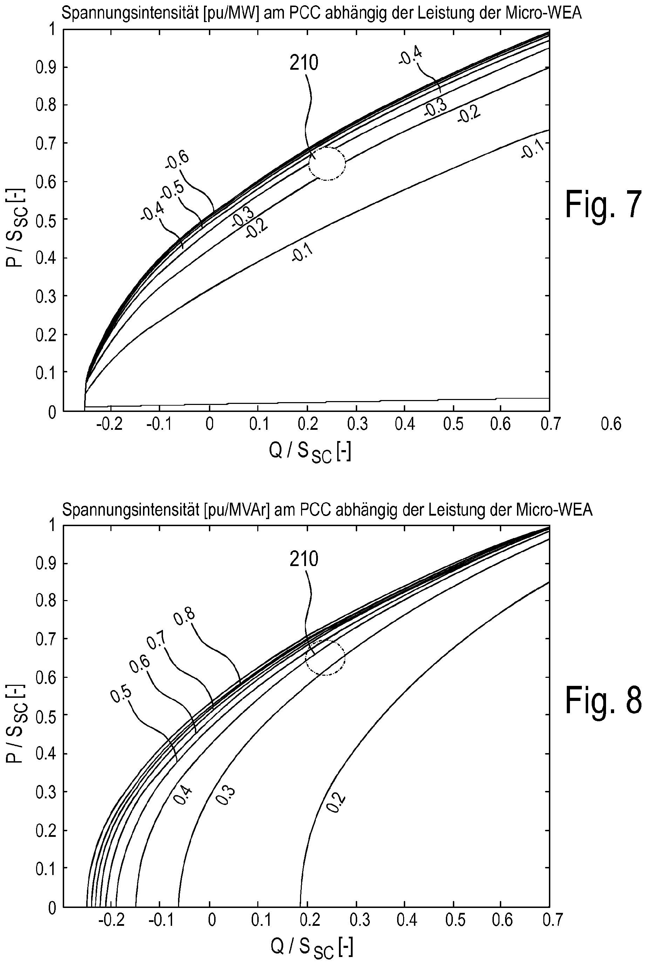

Die vorgeschlagene Lösung analysiert zunächst genau das Netz bezogen auf den vorgesehenen Netzanschlusspunkt, insbesondere indem Zusammenhänge wie in der Fig. 6 - und vorzugsweise in den später noch erläuterten Figuren 7 und 8 - dargestellt sind, quantitativ aufgenommen werden. Insbesondere erfolgt eine solche Analyse unter wiederholter Aufstellung und Lösung der Jacobi-Matrix für diverse Punkte. Basierend auf einer solchen Netzanalyse kann dann sowohl eine Stabilitätsgrenze gemäß der Stabilitätsgrenze 202 festgelegt werden, als auch ein gewünschter Betriebsbereich gemäß dem erhöhten Betriebsbereich 210 der Fig. 6 ausgewählt werden.

Ergänzend wird vorgeschlagen, dass eine Regelung der Windenergieanlage im Sinne einer geschlossenen Regelschleife durchgeführt wird, wie sie insbesondere in der Fig. 2 oder auch der Fig. 4 dargestellt ist. In Fig. 2 besteht die Regelschleife im Wesentlichen aus dem Wechselrichter 16, dem Trafo 18 und der Steuereinheit 22, die Messwerte am Netzanschlusspunkt 2 berücksichtigt und den Wechselrichter 16 steuert, um dadurch die eingespeiste Wirkleistung P und Blindleistung Q gemäß dem Wirkpfeil 20 einzustellen. Die Regelung kann zwar auch Auswirkung auf die Steuerung der Windenergieanlage im Bereich des Generators 6 haben, zunächst kommt aber die beschriebene Regelschleife aus Wechselrichter 16, Trafo 18 und Steuereinheit 22 ohne mechanische Elemente aus und kann äußerst schnell reagieren. Hierfür kann die Kenntnis der Netzeigenschaften am Netzanschlusspunkt, also Netzanschlusspunkt 2 gemäß Fig. 2, mit berücksichtigt werden, insbesondere in der Steuereinheit 22 mit berücksichtigt werden. Es ist somit eine schnelle Regelung implementierbar, die dabei das Verhalten des Netzes am Netzanschlusspunkt, insbesondere die Stabilitätsgrenze kennt. Hierdurch wird es möglich, die Windenergieanlage oder den Windpark - ggf. auch andere Erzeuger - in einem gewünschten Betriebsbereich, wie dem erhöhten Betriebsbereich 210 der Fig. 6, zu betreiben und dabei gleichwohl eine hohe Stabilität und Sicherheit zu gewährleisten.

Die Figuren 7 und 8 zeigen die Spannungssensitivität in Abhängigkeit der Blindleistung Q und der Wirkleistung P. Beide Figuren 7 und 8 verwenden somit die gleichen Werte an Abszisse und Ordinate, nämlich normierte Blindleistung an der Abszisse bzw. normierte Wirkleistung an der Ordinate.

Die gezeigte Spannungssensitivität ist die Änderung der Spannung mit der Änderung der Wirkleistung gemäß Fig. 7 bzw. die Änderung der Spannung mit der Blindleistung gemäß Fig. 8. Anders ausgedrückt wird die partielle Ableitung der Spannung am Netzanschlusspunkt nach der Wirkleistung in Fig. 7 und die partielle Ableitung der Spannung nach der Blindleistung in Fig. 8 dargestellt. Fig. 7 zeigt somit das Verhalten des Wirkleistungsblocks 52 der Fig. 5. Fig. 8 zeigt das Verhalten des Blindleistungsblocks 54 der Fig. 5, wobei in beiden Fällen die Darstellung abhängig der Betriebspunkte dargestellt ist, die insoweit durch die jeweils aktuell eingespeiste Blindleistung Q und eingespeiste Wirkleistung P bestimmt werden. Die Werte der jeweiligen Kennlinien beziehen sich auf einen Netzanschlusspunkt mit einer Kurzschlussleistung $S_{SC}$ = 3,73MVA an den beispielhaft zwei Windenergieanlagen mit je einer Nennleistung von 2MW angeschlossen werden sollen. Somit könnten mit dieser Testanordnung Tests bei einem Kurzschlussstromverhältnis von etwas weniger als 1 durchgeführt werden. Für durchgeführte Tests wurde aber die jeweils aktuelle Leistung der Testwindfarm als Basis verwendet und als Anschlussleistung der Zielwindfarm, also der (fiktiv) zu untersuchenden Windfarm festgelegt.

Bezogen auf die vorliegende Ausführungsform, also die Beispielkonfiguration, ist jeweils die Änderung der normierten Spannung bezogen auf eine Änderung der Leistung P in MW bzw. eine Änderung der Blindleistung Q in MVAr beschrieben. In den Figuren 7 und 8 ist zudem der gewünschte, also erhöhte Betriebsbereich 210 eingezeichnet. Demnach beträgt die Spannungssensitivität bezogen auf Wirkleistungsänderungen gemäß Fig. 7 etwa minus 0,2 bis minus 0,4. Die Spannungssensitivität in dem erhöhten Betriebsbereich 210 bezogen auf Änderungen der Blindleistung gemäß Fig. 8 beträgt etwa 0,3 bis 0,5. Es wird somit vorgeschlagen, für die Auslegung der an dem konkreten Netzanschlusspunkt anzuschließenden Windenergieanlage diese Spannungssensitivität in Bezug auf Änderungen der Wirkleistung, wie beispielhaft in Fig. 7 gezeigt, und/oder in Bezug auf Änderungen der Blindleistung, wie beispielhaft in Fig. 8 gezeigt, aufzunehmen und in der Steuerung zu berücksichtigen. Insbesondere sollen diese Werte auch bei der Steuerung und vorzugsweise auch bei der Auslegung der Steuerung berücksichtigt werden. Vorzugsweise wird eine Reglerverstärkung abhängig von der Sensitivität, insbesondere Spannungssensitivität ausgewählt.

Insbesondere wird vorgeschlagen, diese Werte in dem geschlossenen Regelkreis zu berücksichtigen, wie er schematisch durch die in Fig. 2 gezeigten Elemente Wechselrichter 16, Trafo 18 und Steuereinheit 22 verwirklicht wird. Dabei kommt es auf den Trafo 18 weniger an, er dürfte jedoch häufig vorhanden und notwendig sein, um schon am Netzanschlusspunkt 2 eine entsprechend hohe Spannung einspeisen zu können. Insbesondere werden Erkenntnisse über die Spannungssensitivität in der Steuereinheit 22 berücksichtigt. Somit kann in Kenntnis dieser Werte eine maßgeschneiderte Steuerung bzw. Regelung für den konkreten Netzanschlusspunkt ausgelegt und umgesetzt werden. Damit ist es dann möglich, von bisherigen großen Werten des Kurzschlussstromverhältnisses von 10 und noch höher herunterzukommen und geringe Werte, wie bspw. einen Wert von 1,5 für das Kurzschlussstromverhältnis, vorzusehen und damit die Windenergieanlage in dem erhöhten Betriebsbereich 210 zu betreiben, der in den Figuren 6 bis 8 zur Veranschaulichung eingezeichnet ist.

Die Erfindung schlägt somit vor, insbesondere eine Windenergieanlage und schließlich auch einen Windpark nicht mehr nach dem alten Prinzip des Netzparallelbetriebs anzuschließen, in der Annahme, dass die Netzkapazität ausreicht, sondern vielmehr gezielt den Anschlusspunkt auszuwerten und diese Erkenntnisse bereits im Vorfeld zu berücksichtigen und dann eine maßgeschneiderte Windenergieanlage oder Windenergieanlagenpark dort anzuschließen. Dabei wird vorzugsweise auch die Steuerung bzw. Regelung und auch der auszuwählende Betriebsbereich, insbesondere in Bezug auf einzuspeisende Blindleistung Q und einzuspeisende Wirkleistung P maßgeschneidert und näher an einer Stabilitätsgrenze angeordnet, als von der Fachwelt bisher durchgeführt wurde. Dabei werden gezielt die Vorzüge einer Windenergieanlage eingesetzt, nämlich auf Änderungen, insbesondere Änderungen von Zuständen des Netzes schnell, und gezielt reagieren zu können. Hierdurch wird jedenfalls für das Anschließen von Windenergieanlagen an das Netz eine massive Überdimensionierung des Netzes, insbesondere des konkreten Netzanschlusspunktes, vermieden. Gleichwohl kann die Stabilität eingehalten oder sogar verbessert werden, wenn die Steuerung bzw. Regelung sehr genau die Eigenschaften des Netzanschlusspunktes bzw. des Netzes bezogen auf den Netzanschlusspunkt kennt und Zustände im Netz beobachtet.

Rein vorsorglich wird noch darauf hingewiesen, dass unter einer Regelung grundsätzlich ein geschlossener Regelkreis mit Rückführung verstanden wird, wobei eine Steuerung grundsätzlich einen offenen "Regelkreis" bezeichnet, also eine Situation ohne Rückführung. Gleichwohl kann ein Steuerblock, der wiederum ein Steuerverfahren implementiert, in einer Regelschleife eingesetzt werden. Für das Beispiel der Fig. 2 bedeutet das, dass die Steuereinheit 22 insoweit eine Steuerung ist, als das sie eine bestimmte Steuerfunktion oder Übertragungsfunktion, die auch nicht linear und/oder sprunghaft sein kann und/oder mehrere Größen betreffen kann, aufweist. Eingesetzt wird diese Steuereinheit allerdings in dem Regelkreis, der in Fig. 2 dargestellt ist und im Wesentlichen neben der Steuereinheit 22 den Wechselrichter 16, Trafo 18 und schließlich eine Messeinheit am Netzanschlusspunkt 2 mit Vergleichseinheit 23 umfasst. Die Steuereinheit 22 steuert also den Wechselrichter und ist dafür in dem geschlossenen Regelkreis eingebunden und damit Teil einer Regelung.

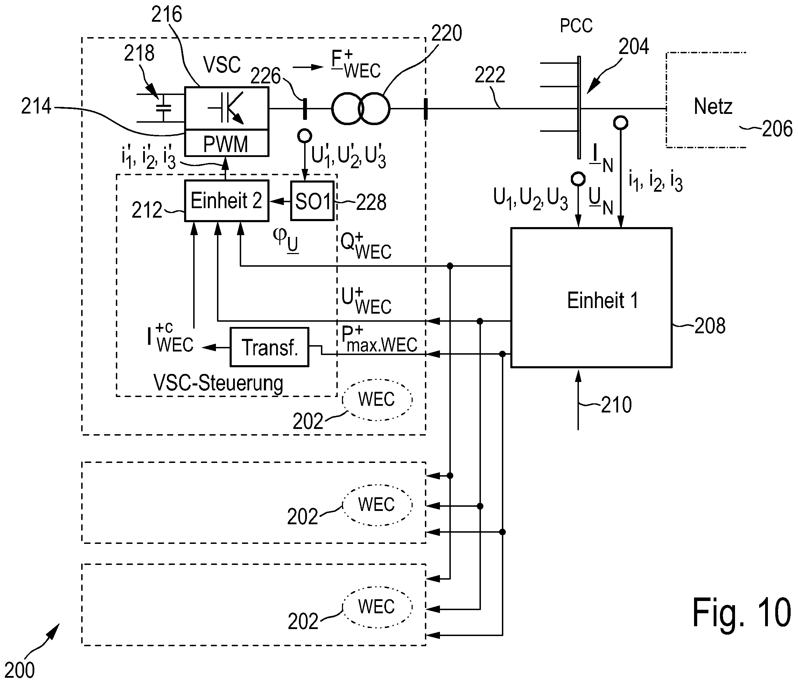

Fig. 10 zeigt schematisch einen Windpark 200, der in dem Beispiel drei Windenergieanlagen 202 aufweist, die symbolisch mit WEC gekennzeichnet sind. Jeder Windenergieanlage 202 sind weitere steuerungstechnische Elemente zugeordnet, was durch einen gestrichelten Kasten gekennzeichnet ist. Ein solcher gestrichelter Kasten ist für jede Windenergieanlage 202 angedeutet, wohingegen die zugeordneten Elemente nur in einer, nämlich der in Fig. 10 oben dargestellten Windenergieanlage 202 ausgeführt sind. Die meisten Elemente davon können auch örtlich in der Windenergieanlage, wie bspw. im Turm der Windenergieanalage angeordnet sein.

Insoweit die Regelungs- bzw. Steuerungsstrukturen der Figuren 10 bis 13 von den vorstehend im Zusammenhang mit Fig. 2 und Fig. 4 genannten abweichen, sind diese vorstehend genannten Strukturender Figuren 2 und 4 als ergänzende Erläuterungen hilfreich und zur allgemeinen Erläuterung sinnvoll.

Der Windpark 202 ist dabei über einen Netzanschlusspunkt 204, der auch als PCC bezeichnet ist, an ein elektrisches Wechselspannungsnetz 206 angeschlossen. Das elektrische Wechselspannungsnetz 206 und entsprechend auch der Netzanschlusspunkt 204 sind 3-phasig ausgeführt, was in Fig. 10 der Einfachheit halber zeichnerisch aber nicht hervorgehoben ist.

Am bzw. hinter dem Netzanschlusspunkt 204 wird eine Netzspannung $\underline{U}_N$ gemessen, die die drei Spannung $u_1$, $u_2$ und $u_3$ umfasst. Außerdem wird am oder kurz hinter dem Netzanschlusspunkt 204 der eingespeiste Strom $\underline{I}_N$ erfasst, der die einzelnen Stromkomponenten $i_1$, $i_2$ und $i_3$ enthält. Diese gemessenen Werte für die Netzspannung $\underline{U}_N$ und den eingespeisten Strom $\underline{I}_N$ werden kontinuierlich erfasst und in die Zentralsteuereinheit 208 eingegeben. Die Zentralsteuereinheit 208 ist als zentrale Steuereinheit für den gesamten Windpark 200 vorgesehen. Die Zentralsteuereinheit 208 erhält zudem einige Vorgabewerte an ihrem Vorgabeeingang 210, nämlich einen Sollwert für die Spannung des Mitsystems $U^+_{WEC,soll}$ , der als Sollwert der Klemmspannung aller Windenergieanlagen verwendet werden soll und einen erwarteten Spannungsabfall auf der Leitung zwischen Windenergieanlage und Netzanschlusspunkt berücksichtigt. Alternativ kann ein solcher Wert auch für jede der Windenergieanlagen 202 hier eingegeben werden. Weiterhin werden Reglerparameter vorgegeben, nämlich eine Differenzspannung $\Delta U_t$ sowie die erste und zweite Timerzeit $t_A$ und $t_B$, und eine Blindleistungsschrittweite $\Delta Q^+_{WEC}$ . Weiterhin wird eine effektive Impedanz $\underline{Z}_{PCC\text{-}WEC}$ und außerdem werden zwei Kennfelder vorgegeben. Die effektive Impedanz $\underline{Z}_{PCC\text{-}WEC}$ beschreibt die Impedanz der Zuleitung zwischen der Windenergieanlage 202 und dem Netzanschlusspunkt 204. Dieser Wert kann gemeinsam für jede Verbindungsleitung zwischen jeweils einer Windenergieanlage 202 und dem Netzanschlusspunkt 204 vorgegeben sein oder insbesondere bei großen Abweichungen innerhalb des Windparks für jede einzelne Windenergieanlage vorgegeben sein.

Diese Impedanz dient einer Kompensation eines Spannungsabfalls auf entsprechenden Leitungen, was auch als so genannte Line Drop Compensation bezeichnet werden kann, welche infolge der weitgehenden Parallelschaltung der einzelnen Windenergieanlagen in einem Park nur virtuell möglich ist. Diese Berücksichtigung erfolgt insbesondere im Sinne einer im Mittel effektiven Berücksichtigung. Aus diesem Grunde wird vorzugsweise vorgeschlagen, für den gesamten Park nur eine einzige Impedanz zu berücksichtigen.

Die Zentralsteuereinheit 208 gibt dann an die Windenergieanlage 202 drei Sollwerte aus, nämlich die einzuspeisende Blindleistung des Mitsystems $Q^+_{WEC}$ , die Spannung des Mitsystems $U^+_{WEC}$ , die am Ausgang der Windenergieanlage einzustellen ist, und einen Maximalwert für die einzuspeisende Wirkleistung des Mitsystems $P^+_{max\,WEC}$ .

Diese drei Sollwerte werden dem Grunde nach für jede Windenergieanlage 202 vorgegeben, was in Fig. 10 nur angedeutet ist.

Diese Vorgabewerte werden dann an die Anlagensteuereinheit 212 eingegeben, wobei basierend auf der vorgegebenen maximalen Wirkleistung noch die Kosinus-Stromkomponente des Mitsystems $I^{+c}$ berechnet wird. Diese Komponente kann bspw. berechnet werden mit der Formel:

$$I^{+c}_{WEC} = Q^+_{WEC} / U^+_{WEC}$$

Dazu korrespondierend wird im Übrigen eine Sinuskomponente des Stroms des Mitsystems der Windenergieanlage $I^{+s}_{WEC}$ nach der Formel berechnet:

$$I^{+s}_{WEC} = P^+_{WEC} / U^+_{WEC}$$

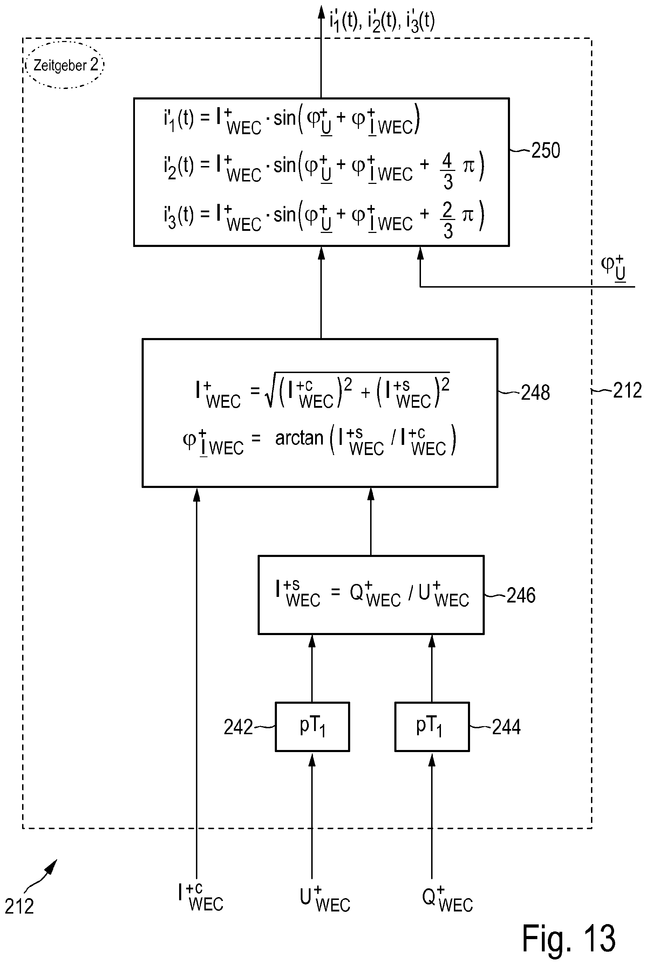

Die Anlagensteuereinheit 212 wird noch später detaillierter im Zusammenhang mit der Fig. 13 erläutert. Dabei gibt die Anlagensteuereinheit 212 dann Sollwerte für die einzustellenden Ströme i$_1$', i$_2$' und i$_3$' aus. Diese Ströme werden dem Steuerblock 214 zum Durchführen der pulsweiten Modulation zugeführt und dieser Steuerblock wird auch als PWM in Fig. 10 gekennzeichnet. Der PWM 214 steuert dann den Wechselrichter 216 an, der seine Eingangsenergie an den Zwischenkreis 218 erhält. Der Wechselrichter 216 arbeitet somit spannungsbasiert und wird der Fachwelt auch als "Voltage Source Control" VSC bezeichnet.

Als Ergebnis gibt der Wechselrichter 216 ein Strom des Mitsystems $I^+_{WEC}$ aus, der über einen Transformator 220 und eine parkinterne Zuleitung 222 dem gemeinsamen Netzanschlusspunkt 204 zuführt. Der Netzanschlusspunkt 204 zeigt schematisch weitere Anschlüsse 224 zum Anschließen weiterer Windenergieanlagen 202.

Zur internen Steuerung der Windenergieanlage, insbesondere durch die Anlagensteuereinheit 212, werden die drei Spannungen u$_1$', u$_2$' und u$_3$' am Ausgang 226 der Windenergieanlage bzw. des Wechselrichters 216 erfasst und dem Zustandsbeobachter 228, der auch SO1 in Fig. 10 gekennzeichnet ist, eingegeben. Der Zustandsbeobachter 228 ermittelt daraus einen Phasenwinkel $\varphi_U$, der der Anlagensteuereinheit 212 eingegeben wird. die Funktionsweise des Zustandsbeobachters 228 ist im Detail in der deutschen Patentanmeldung DE 10 2009 031 017 A1 beschrieben. Insbesondere ist der Zustandsbeobachter 228 dort in der Fig. 4 beschrieben. Dort sind die Spannung u$_1$, u$_2$ und u$_3$ als Eingangsgrößen angegeben und die Phasenwinkel $\varphi_1$, $\varphi_2$ und $\varphi_3$ als Ausgangsgrößen dargestellt. Der Inhalt dieser deutschen Patentanmeldung soll somit auch Inhalt der vorliegenden Anmeldung sein. Jedenfalls soll die Beschreibung zum Zustandsbeobachter gemäß Fig. 4 der deutschen Patentanmeldung dort Teil der vorliegenden Anmeldung sein. Zu der deutschen Patentanmeldung existiert auch eine US-Anmeldung 13/381,302.

Entsprechend misst die Zentralsteuereinheit 208 am Anschlusspunkt 204 des Windparks die Spannungen und den Gesamtstrom des Windparks.

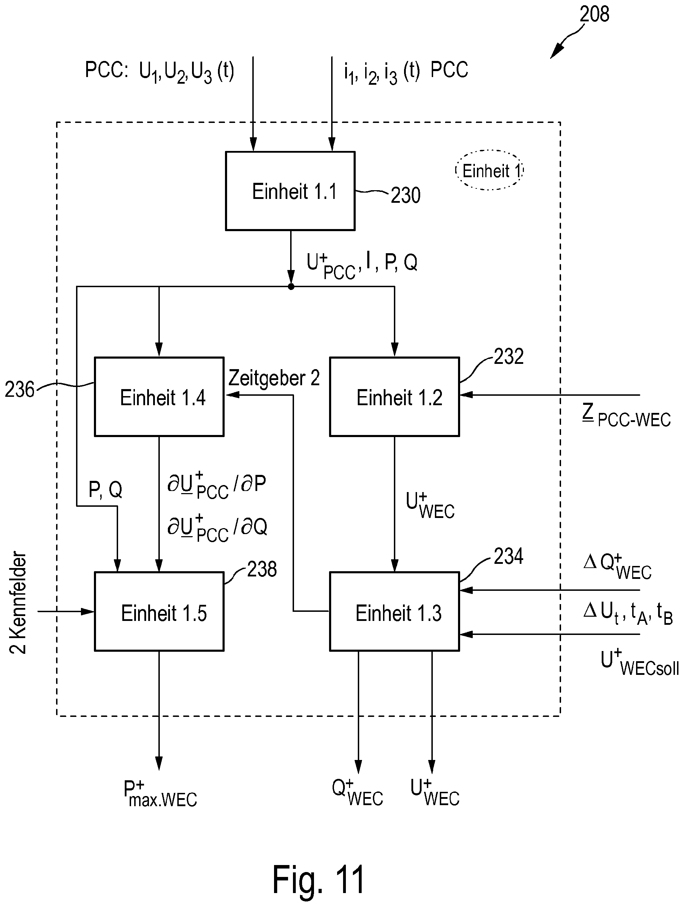

Der Aufbau der Zentralsteuereinheit 208 ist in Fig. 11 dargestellt. Entsprechend sind die am Netzanschlusspunkt 204 gemessenen Spannungen u$_1$, u$_2$ und u$_3$ und dort gemessene Ströme i$_1$, i$_2$, und i$_3$ die Eingangsmessgrößen für die Zentralsteuereinheit 208. Diese Spannungen und Ströme sind Augenblickswerte und werden in den Berechnungsblock 230 eingegeben, der in Fig. 11 auch als Unit 1.1 gekennzeichnet ist.

Der Berechnungsblock 230 berechnet aus den eingegebenen Strömen und Spannungen, die am Netzanschlusspunkt 204 bspw. mit einer Tastrate von 5KHz gemessen werden, die eingespeiste Wirk- und Blindleistung P und Q, sowie den Strom I und die Spannung des Mitsystems $U^+_{PCC}$. Die Zerlegung eines 3-phasigen Systems wie hier einer 3-phasigen Spannung nach der Methode der symmetrischen Komponenten in Mitsystem und Gegensystem ist grundsätzlich bekannt. Die Berechnung in diesem Berechnungsblock 230 kann bspw. auch so durchgeführt werden, wie in der deutschen Patentanmeldung 10 2011 084 910.6 im Zusammenhang mit der Fig. 3 beschrieben wird.

Der Schätzblock 232, der in Fig. 11 auch als Unit 1.2 gekennzeichnet ist, berechnet bzw. schätzt aus den am Netzanschlusspunkt 204 gemessenen Größen bzw. daraus abgeleiteten Größen die zu erwartende Spannung an den Klemmen der Windenergieanlage, nämlich die Mitsystemspannung $U^+_{WEC}$ an den Klemmen der Windenergieanlage, insbesondere am Ausgang 226 des Wechselrichters 216. Hierfür wird die Spannung des Mitsystems am Netzanschlusspunkt $U^+_{PCC}$, der Strom I und der Phasenwinkel $\phi$ = arctan(Q / P) verwendet. Weiterhin wird die effektive Impedanz zwischen dem Netzanschlusspunkt und der Windenergieanlage $\underline{Z}_{PCC-WEC}$ benötigt, die vorher ermittelt und hier in die zentrale Steuereinheit 208 und in den Schätzblock 232 eingegeben wird. Im Grunde erfolgt hierbei eine Berücksichtigung eines Spannungsabfalls auf der Verbindungsleitung zwischen der Windenergieanlage zum Netzanschlusspunkt. Dieser Spannungsabfall wird berücksichtigt bzw. kompensiert. Die so erfasste bzw. berechnete Spannung des Mitsystems an der Windenergieanlage $U^+_{WEC}$ ist eine Schätzung für ein Äquivalent, also für eine virtuelle Spannung, von der ausgegangen wird.

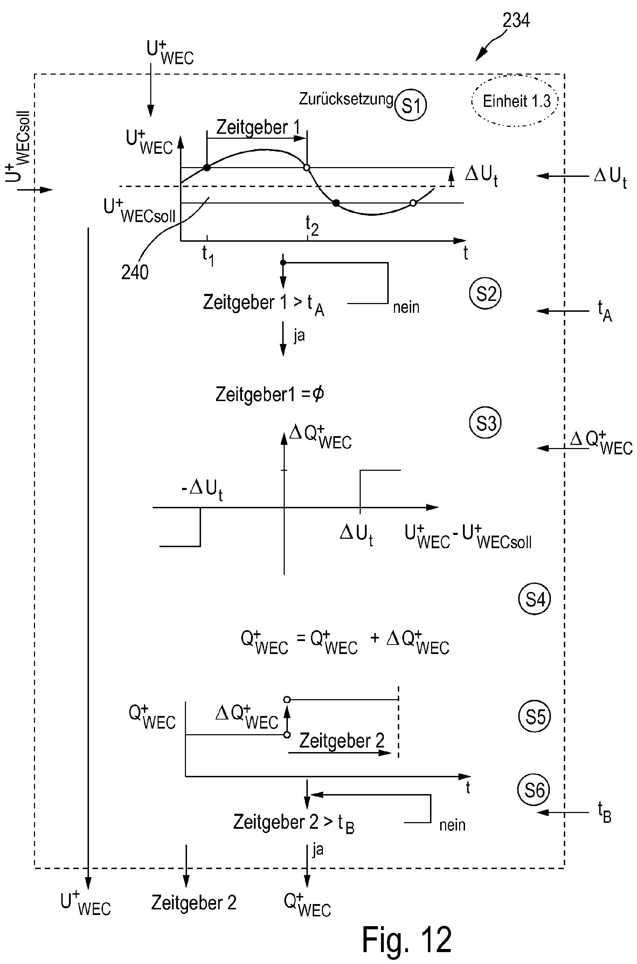

Ein wichtiges Element der Zentralsteuereinheit 208 bildet der Regelblock 234, der in Fig. 11 auch als Uni 1.3 gekennzeichnet ist. Dieser Regelblock 234 wird noch im Detail im Zusammenhang mit der Fig. 12 erläutert. In jedem Fall erhält er als Eingangsgröße die Mitsystemspannung der Windenergieanlage $U^+_{WEC}$ sowie diverse Reglerparameter, nämlich $\Delta Q^+_{WEC}$, $\Delta U_t$, $t_A$, $t_B$ und den Spannungssollwert der Windenergieanlage $U^+_{WECsoll}$.

Der Regelblock 234 gibt die Spannung des Mitsystems der Windenergieanlage $U^+_{WEC}$ aus, gibt den Wert nämlich im Grunde weiter, und gibt einen Sollwert für die durch die Windenergieanlage einzuspeisende Blindleistung des Mitsystems $Q^+_{WEC}$ aus. Weiterhin gibt der Regelblock 234 einen timer2 aus, der von dem Sensitivitätsblock 236 benötigt wird und diesem übergeben wird. Der Sensitivitätsblock 236 ist in Fig. 11 auch als Unit 1.4 gekennzeichnet.

Der Sensitivitätsblock 236 bestimmt die Netzsensitivitäten aus den Werten, die im Berechnungsblock 230 basierend auf den Messungen am Netzanschlusspunkt berechneten Größen. Die Berechnung erfolgt mittels der folgenden Gleichungen:

$$\partial U_{PCC} \, / \, \partial P := \Delta U_{PCC}^{+} \, / \, \Delta P$$

$$\partial U_{PCC} \, / \, \partial Q := \Delta U_{PCC}^{+} \, / \, \Delta Q$$

Die bei dieser Berechnung zugrundegelegten Differenz sind Werte, die zu unterschiedlichen Zeitpunkten gehören und entsprechend werden die berechneten Größen zugrundegelegt, die sich im zeitlichen Abstand der Größe des timers2 ergeben, insbesondere zum Zeitpunkt, bei dem der timer2 den Wert 0 hat und dem Zeitpunkt, bei dem der timer2 seinen maximalen Wert hat, was durch die folgenden Gleichungen beschrieben wird:

$$\Delta U_{PCC}^{+} = U_{PCC}^{+}\big(timer2 = \max\big) - U_{PCC}^{+}\big(timer2 = 0\big)$$

$$\Delta P = P\big(timer2 = \max\big) - P\big(timer2 = 0\big)$$

$$\Delta Q = Q\big(timer2 = \max\big) - Q\big(timer2 = 0\big)$$

Der Wert timer2=0 bezeichnet insoweit die Werte, die aufgenommen bzw. bestimmt wurden unmittelbar bevor der timer2 gesetzt bzw. gestartet wurde.
Entsprechend gibt der Sensitivitätsblock 236 die Netzsensitivitäten aus, nämlich bezogen auf Wirkleistungsänderung bzw. Blindleistungsänderung, nämlich $\partial U_{PCC} \, / \, \partial P$ und $\partial U_{PCC} \, / \, \partial Q$.
Schließlich ist ein Kennfeldblock 238 vorhanden, der in der Fig. 11 auch als Unit 1.5 gekennzeichnet ist.
Dieser Kennfeldblock 238 erhält die Wirkleistung und Blindleistung und die Netzsensitivitäten als Eingangssignale. Außerdem werden dort Kennfelder eingegeben und gespeichert, nämlich als Ergebnis einer vorher durchgeführten Netzanalyse. In dem Kennfeldblock 238 liegt also die Netzsensitivität $\partial U_{PCC} \, / \, \partial P$ und $\partial U_{PCC} \, / \, \partial Q$ als vorab aufgenommene in Kennfeldern gespeicherte Werte vor, nämlich in zwei Kennfeldern, und als aktuelle Werte für den aktuellen Arbeitspunkt, der sich nämlich aus dem aktuellen Wert der eingespeisten Wirkleistung und dem aktuellen Wert der eingespeisten Blindleistung ergibt. Hier werden jeweils die beiden Netzsensitivitäten verglichen, nämlich jeweils die vorher gespeicherte mit der aktuell aufgenommenen, nämlich $\partial U_{PCC} \, / \, \partial P$ der Netzanalyse mit $\partial U_{PCC} \, / \, \partial P$ des aktuellen Arbeitspunktes und $\partial U_{PCC} \, / \, \partial Q$ der Netzanalyse mit $\partial U_{PCC} \, / \, \partial Q$ für den aktuellen Arbeitspunkt.
Vorzugsweise wird hier auch eine Stabilitätsgrenze hinterlegt und ein Abstand des aktuellen Arbeitspunktes von der Stabilitätsgrenze erfasst. Unterschreitet der aktuelle Arbeitspunkt einen vorbestimmten Abstand zur Stabilitätsgrenze, und/oder liegt eine auffällige Abweichung der erwarteten Sensitivität, also der vorab aufgenommenen und in den Kennfeldern hinterlegte Netzsensitivität von der aktuell festgestellten Netzsensitivität, erfolgt eine Verminderung der maximal einzuspeisenden Wirkleistung $P_{maxWEC}$. Dieser Wert wird entsprechend bei dem Kennfeldblock 238 ausgegeben.
Der Regelungsblock 234 - Unit 1.3 - wird im Detail in Fig. 12 auch im Sinne eines schematischen Ablaufdiagramms beschrieben. Im Schritt S1 erfolgt ein Vergleich der Mitsystemspannung der Windenergieanlage $U_{WEC}^{+}$ mit einem Sollwert hierfür, nämlich $U_{WECsoll}^{+}$. Die Spannung des Mitsystems an der Windenergieanlage $U_{WEC}^{+}$ ist die virtuelle Spannung, die durch den Schätzblock 232 aus der gemessenen Spannung am Netzanschlusspunkt und der Berücksichtigung der effektiven Impedanz bestimmt wurde. Bei diesem Schritt S1 wird dabei zunächst überprüft, ob diese virtuelle Spannung $U_{WEC}^{+}$ in einem Toleranzband 240 liegt. Das Toleranzband 240 ist hierbei ein Band, dessen Ränder um die vorgegebene Differenzspannung $\Delta U_{t}$ über bzw. unter dem Spannungssollwert $U_{WECsoll}^{+}$ liegt.

Überschreitet bspw. die Spannung zum Zeitpunkt $t_1$ das Toleranzband, wird ein erster timer1 gestartet.
Es wird dann die Zeit gemessen, die bis zum Zeitpunkt $t_2$ vergeht, an dem die Spannung in das Toleranzband 240 zurückkehrt. Ähnlich kann auch verfahren werden, wenn die Spannung das Toleranzband nach unten verlässt, was die Grafik in Schritt 1 andeutet.
In dem logischen Schritt S2 ist das Verhalten von timer1 beschrieben. Dabei laufen die Schritte S1 und S2 und auch noch weiter unten beschriebene Schritte im Grunde gleichzeitig ab und können auch jederzeit ablaufen. Diese Schritte S1 und S2 beschreiben insoweit jeweils Teilfunktionen oder Teilabläufe bzw. Funktionalitäten des Regelblocks 234.

Im Schritt S2 wird erläutert, dass der timer1 hochzählt, bis er den Wert $t_A$ überschreitet. In diesem Fall des Überschreitens wird der timer1 auf 0 gesetzt und die Hochlaufschleife, die im Schritt S2 beschrieben ist, beginnt von neuem. Wenn die Spannung im Toleranzband zurückkehrt, bevor der timer1 den Wert $t_A$ überschritten hat, wird der timer1 auf 0 zurückgesetzt und verbleibt dort bis die Spannung das Toleranzbands 240 erneut verlässt. Es wird nichts weiter ausgelöst.

Hat aber der timer1 den Wert $t_A$ überschritten, wird die vorgegebene Blindleistung sprunghaft bzw. um eine Stufe verändert, was in dem Schritt S3 erläutert wird. Demnach wird eine Blindleistungsdifferenz des Mitsystems $\Delta Q_{WEC}^+$ vorgegeben, wenn die Differenz $U_{WEC}^+ - U_{WECsoll}^+$ den Wert $\Delta U_t$ überschreitet oder den Wert $-\Delta U_t$ unterschreitet. Entsprechend wird ein Differenzblindleistungswert des Mitsystems $\Delta Q_{WEC}^+$ oder ein entsprechender negativer Wert -$\Delta Q_{WEC}^+$ gesetzt. Der vorgegebene Blindleistungswert des Mitsystems für die Windenergieanlage $Q_{WEC}^+$ wird dann basierend auf seinem bisherigen Wert um diesen Differenzwert verändert, also um eine Stufe erhöht, wenn die Spannung des Toleranzbands 240 nach oben verlassen hat, oder um eine Stufe verringert, wenn die Spannung des Toleranzbands 240 nach unten verlassen hat. Dies gibt die Gleichung im Schritt S4 an. Der Wert $\Delta Q_{WEC}^+$ ist somit die Höhe der Stufe.

Mit dem Verändern der Blindleistung der Windenergieanlage um eine Stufe wird außerdem ein timer2 in Lauf gesetzt. Das veranschaulicht der Schritt S5 für das Beispiel, dass die Blindleistung des Mitsystems der Windenergieanlage $Q_{WEC}^+$ um die Stufe $\Delta Q_{WEC}^+$ erhöht wurde. Gleiches gilt sinngemäß bei einer Verringerung. Der timer2 läuft in einer Schleife hoch, solange diese Erhöhung der Blindleistung um eine Stufe anliegt. Überschreitet der timer2 dabei den Vergleichswert $t_B$, wird dieser timer2 ausgegeben, um im Sensitivitätsblock 236 weiter verwendet werden zu können. Die Schleife für den timer2 wird in dem Schritt S6 veranschaulicht.

Es wird vorgeschlagen, dass der timer2 unbedingt abgewartet wird, bevor die Blindleistung erneut verändert werden könnte. In dieser Zeit wird also auch keine Blindleistung um eine Stufe reduziert.

Der Regelungsblock 234 gibt u.a. den Spannungssollwert $U_{WECsoll}^+$ aus und $U_{WECsoll}^+$ wird dann von den Windenergieanlagen jeweils als $U_{WEC}^+$ verwendet.

Außerdem wird die ggf. veränderte einzustellende Blindleistung des Mitsystems der Windenergieanlage $Q_{WEC}^+$ ausgegeben, um auch insgesamt von der Zentralsteuereinheit 208 ausgegeben zu werden und an die jeweilige Anlagensteuereinheit 212 übergeben zu werden, wie Fig. 10 zeigt.

Der Regelungsblock 234 gibt somit einen speziellen Hysterese-Totzeit-Regler an, für den die Werte $\Delta U_t$, $t_A$, $t_B$ und $\Delta Q_{WEC}^+$ Parameter darstellen. Die Timer haben dabei die Bedeutung und Wirkung, dass eine Aktivierung einer Stufe für die Blindleistungserhöhung- oder Verringerung nur durchgeführt wird, wenn der timer1 den Wert $t_A$ erreicht. Kehrt die Spannung vorher in das Toleranzband 240 zurück, bleibt das Verlassen des Toleranzbandes ohne Folgen für die Regelung. Erreicht der timer1 aber den Wert $t_A$, wird die Erhöhung oder Verringerung der Blindleistung um eine Stufe aktiviert und der timer2 gestartet. Es wird dann unbedingt gewartet, bis timer2 den Wert $t_B$ erreicht.

Ziel dieses Hysterese-Reglers, der in Regelblock 234 beschrieben ist, ist in Kombination mit der Anlagensteuereinheit 212 eine Instabilität der windenergieanlageinternen Regelung bei Verwendung der Spannung des Netzanschlusspunktes als Ist-Wert zu verhindern. Außerdem soll eine Instabilität von Spannungsregelungen verhindert werden, welche die Blindleistung der Windenergieanlage oder des Windparks als Stellgröße benutzen.

Der Regelungsblock 234, bzw. die Unit 1.3, realisiert Rechenfunktionen, welche auch an anderer Stelle als in der Zentralsteuereinheit 208 (der zentralen Unit 1) verwendet werden können, nämlich in Anlagensteuereinheiten 212 individueller Windenergieanlagen. Bedingt durch andere Eingangsdaten, insbesondere Messdaten, entstehen dann andere inhaltliche Aussagen, also entsprechend andere Ergebnisse.

Die Anlagensteuereinheit 212, von denen in einem Windpark mehrere vorgesehen sind, führt insbesondere einige Berechnungen durch, wie in Fig. 13 detailliert erläutert ist. In diese Anlagensteuereinheit 212 geht die Kosinuskomponente des einzustellenden Mitsystemstroms der Windenergieanlage $I_{WEC}^{+c}$ ein. Weiterhin geht die Spannung bzw. virtuelle Spannung des Mitsystems der Windenergieanlage $U_{WEC}^+$ ein und die einzustellende Blindleistung des Mitsystems der Windenergieanlage $Q_{WEC}^+$. Diese beiden Größen werden jeweils über ein Verzögerungsglied erster Ordnung 242 bzw. 244 geführt und danach dem Sinuskomponentenblock 246 zugeführt. In dem Sinuskomponentenblock 246 wird dann die Sinuskomponente des einzustellenden Stroms des Mitsystems der Windenergieanlage $I_{WEC}^{+s}$ nach der dort dargestellten Formel berechnet, nämlich:

$$I_{WEC}^{+s} = Q_{WEC}^{+} / U_{WEC}^{+}$$

Aus der Kosinus- und der Sinuskomponente des einzustellenden Stroms wird dann im Gesamtstromblock 248 die Stromamplitude des einzustellenden Stroms des Mitsystems $I_{WEC}^{+}$ und dessen Winkel $\varphi_{\underline{I}WEC}^{+}$ berechnet, wie in dem Block 248 dargestellt ist, nämlich durch die Gleichung:

$$I_{WEC}^{+} = \sqrt{\left(I_{WEC}^{+c}\right)^2 + \left(I_{WEC}^{+s}\right)^2}$$

$$\varphi_{\underline{I}WEC}^{+} = \arctan\left(I_{WEC}^{+s} / I_{WEC}^{+c}\right)$$

Im sich anschließenden Einzelstromblock 250 werden schließlich die drei einzelnen einzustellenden Phasenströme $i_1'$, $i_2'$ und $i_3'$ mit den dort gezeigten Gleichungen berechnet und als Ergebnis der Anlagensteuereinheit 212 ausgegeben und dem PWM-Block 214 gemäß Fig. 10 übergeben. Die Ströme berechnen sich entsprechend mit den folgenden Gleichungen:

$$i_1'(t) = I_{WEC}^{+} \cdot \sin\left(\varphi_{\underline{U}}^{+} + \varphi_{\underline{I}WEC}^{+}\right)$$

$$i_2'(t) = I_{WEC}^{+} \cdot \sin\left(\varphi_{\underline{U}}^{+} + \varphi_{\underline{I}WEC}^{+} + \frac{4}{3}\pi\right)$$

$$i_3'(t) = I_{WEC}^{+} \cdot \sin\left(\varphi_{\underline{U}}^{+} + \varphi_{\underline{I}WEC}^{+} + \frac{2}{3}\pi\right)$$

Somit werden schließlich die Stromkomponenten individuell für jede Windenergieanlage 202 durch die Anlagensteuereinheit 212 bestimmt, basierend auf zentral vorgegebenen Werten durch die Zentralsteuereinheit 208. In dem gezeigten Beispiel hängt jedenfalls der Winkel $\varphi_{\underline{U}}^{+}$ von der konkreten Messung am Ausgang der konkreten Windenergieanlagen ab und ist jedenfalls insoweit für die Windenergieanlage individualisiert.

Im Übrigen ergibt sich der Kosinusanteil $I_{WEC}^{+c}$ aus der Leistungsregelung der Windenergieanlage. Die Verzögerungsglieder erster Ordnung 242 und 244 stellten somit Filter dar. Diese Filter werden parametrisch an den Regelblock 234 angepasst.

Die Windenergieanlagenregelung begrenzt somit die Leistung und damit ggf. im Detail den Strom $I_{WEC}^{+c}$, auf den Wert $P_{\max WEC}^{+}$.

**Patentansprüche**

1. Verfahren zum Steuern eines mehrere Windenergieanlagen (202) umfassenden Windparks (200) zum Einspeisen elektrischer Leistung an einem Netzanschlusspunkt (PCC) (204) in ein elektrisches Wechselspannungsnetz (206), umfassend die Schritte:

   - Einspeisen eines dreiphasigen Stroms an dem Netzanschlusspunkt (204),
   - Erfassen einer Netzspannung ($U_N$) am Netzanschlusspunkt,
   - Vergleichen der am Netzanschlusspunkt (204) erfassten Netzspannung ($U_N$) mit wenigstens einem vorgegebenem Sollwert, wobei der Sollwert vorgegeben wird, um ein Stabilitätskriterium einzuhalten, das abhängig ist von der vom Windpark (200) eingespeisten Blindleistung und/oder der vom Windpark eingespeisten Wirkleistung,

- Bestimmen eines Arbeitspunktes, der aus je einem Sollwert für Wirk- und Blindleistung für die Windenergieanlagen (202) definiert ist, abhängig von dem durchgeführten Vergleich so, dass das Stabilitätskriterium am Netzanschlusspunkt (204) eingehalten wird, wobei

- die bestimmten Sollwerte des Arbeitspunktes an Anlagensteuereinheiten (212) der einzelnen Windenergieanlagen (202) übergeben werden und

- elektrischer Strom ( $i_1^{'}, i_2^{'}, i_3^{'}$ ) an jeder der Windenergieanlagen (202) abhängig von den vorgegebenen Sollwerten zum gemeinsamen Einspeisen an dem Netzanschlusspunkt (204) erzeugt wird, wobei

eine Stabilitätsgrenze vorausberechnet wird, welche eine Grenze zwischen stabilen und instabilen Arbeitspunkten bildet, und welche für die Steuerung hinterlegt wird um anhand einer solchen ermittelten und hinterlegten Stabilitätsgrenze, einen stabilen Arbeitspunkt einzustellen oder einen eingestellten Arbeitspunkt zu überwachen.

2. Verfahren nach Anspruch 1,
**dadurch gekennzeichnet, dass**

- der an dem Netzanschlusspunkt (204) eingespeiste Strom ($\underline{I}_N$) erfasst wird, insbesondere am Netzanschlusspunkt (204) gemessen wird,
- das Erfassen des eingespeisten Stroms ($\underline{I}_N$), das Erfassen der Netzspannung ($\underline{U}_N$) am Netzanschlusspunkt (204), das Vergleichen der am Netzanschlusspunkt (206) erfassten Netzspannung ($\underline{U}_N$) mit wenigstens einem vorgegebenem Sollwert, und/oder das Bestimmen der Sollwerte von einer Zentralsteuereinheit (208) durchgeführt wird,
- das Bestimmen der Sollwerte abhängig von wenigstens einem veränderlichen Stabilitätskriteriums erfolgt, wobei das Stabilitätskriterium insbesondere abhängig ist von einem Netzzustand des Wechselspannungsnetzes (206) am Netzanschlusspunkt (204).

3. Verfahren nach Anspruch 1 oder 2,
**dadurch gekennzeichnet, dass**
dem Bestimmen der Sollwerte eine Zerlegung in Mitsystem und Gegensystem nach der Methode der symmetrischen Komponenten zugrunde liegt und die Sollwerte Werte des Mitsystems sind, nämlich

- jeweils wenigstens eine auf das Mitsystem bezogene, einzuspeisende Blindleistung $Q_{WEC}^{+}$ der jeweiligen Windenergieanlage (202),

- jeweils wenigstens eine auf das Mitsystem bezogene, Ausgangs- oder Klemmenspannung $U_{WEC}^{+}$ der jeweiligen Windenergieanlage (202) und/oder

- jeweils wenigstens eine auf das Mitsystem bezogene, einzuspeisende Wirkleistung der jeweiligen Windenergieanlage (202), insbesondere eine maximal einzuspeisende Wirkleistung $P_{max,WEC}^{+}$ .

4. Verfahren nach Anspruch 2,
**dadurch gekennzeichnet, dass**
die Stabilitätsgrenze in der Zentralsteuereinheit (208) als Kennfeld hinterlegt wird.

5. Verfahren nach einem der vorstehenden Ansprüche,
**dadurch gekennzeichnet, dass**
die einzuspeisende Wirkleistung $Q_{WEC}$ und die einzuspeisende Blindleistung $P_{WEC}$ begrenzt und entsprechende Sollwerte bestimmt und an die Anlagensteuerungen übergeben werden.

6. Verfahren nach einem der vorstehenden Ansprüche,
**dadurch gekennzeichnet, dass**
aus Messungen am Netzeinspeisepunkt (204), insbesondere der Erfassung der Spannung und/oder des Stroms, Kenngrößen des Netzeinspeisepunktes (204) abgeleitet werden, um Eigenschaften des Wechselspannungsnetzes (206) zu beurteilen.

**7.** Verfahren nach einem der vorstehenden Ansprüche,
**dadurch gekennzeichnet, dass**
Netzsensitivitäten durch eine vorab durchgeführte Netzanalyse aufgenommen und abgespeichert werden und zu einem aktuellen Arbeitspunkt aktuelle Netzsensitivitäten erfasst werden und eine Steuerung, insbesondere Vorgabe oder Veränderung wenigstens eines Sollwertes abhängig von einem Vergleich der aktuellen Netzsensitivitäten mit den vorab aufgenommenen Netzsensitivitäten erfolgt, insbesondere dass ein Sollwert für einzuspeisende Wirkleistung reduziert wird, wenn bei dem Vergleich eine Abweichung einen vorbestimmten Grenzwert ($\Delta U_t$) überschreitet bzw. unterschreitet.

**8.** Verfahren nach einem der vorstehenden Ansprüche,
**dadurch gekennzeichnet, dass**
eine Veränderung eines Sollwertes für die einzuspeisende Blindleistung und/oder einzuspeisende Wirkleistung sprunghaft erfolgt und/oder basierend auf einer Reaktion der Spannung des Netzes (206) am Netzanschlusspunkt (204) auf eine oder diese sprunghafte Veränderung eine aktuelle Netzsensitivität bestimmt wird.

**9.** Verfahren nach einem der vorstehenden Ansprüche,
**dadurch gekennzeichnet, dass**
ein Hysterese-Regler zum Vorgeben der Sollwerte verwendet wird und/oder eine Veränderung wenigstens eines der Sollwerte erfolgt, wenn eine Zustandsgröße im Netz (206), insbesondere die Netzspannung am Netzanschlusspunkt (204) ein vorbestimmtes Kriterium erfüllt, nämlich einen vorbestimmten Grenzwert über oder unterschreitet, bzw. dem Betrage nach überschreitet oder ein Toleranzband verlässt und danach eine vorbestimmte Totzeit abgelaufen ist und die Zustandsgröße weiterhin das vorbestimmte Kriterium erfüllt.

**10.** Verfahren nach einem der vorstehenden Ansprüche,
**dadurch gekennzeichnet, dass**
bei der Vorgabe der Sollwerte die Impedanz wenigstens einer Zuleitung von einer der Windenergieanlage (202) zum Netzanschlusspunkt (204) berücksichtigt wird, um einen auf der Zuleitung zu erwartenden Spannungsabfall zu berücksichtigen.

**11.** Windpark (200) mit mehreren Windenergieanlagen (202), wobei der Windpark (200) mit einem Verfahren gemäß einem der Ansprüche 1 bis 10 gesteuert wird.

**12.** Windpark (200) nach Anspruch 11,
**dadurch gekennzeichnet, dass**
der Windpark (200) eine Zentralsteuereinheit (208) umfasst und dass jede Windenergieanlage (202) des Windparks (200) eine Anlagensteuereinheit (212) umfasst, wobei die Zentralsteuereinheit (208) dazu vorbereitet ist, den Anlagensteuereinheiten (212) Sollwerte für die einzuspeisende Blindleistung und/oder die einzuspeisende Wirkleistung vorzugeben.

**13.** Windpark (200) nach einem der Ansprüche 11 oder 12,
**dadurch gekennzeichnet, dass**
am Netzanschlusspunkt (206) ein Kurzschlussstromverhältnis (SCR) von weniger als 4, insbesondere weniger 2, insbesondere weniger als 1,5, vorliegt.

**Claims**

**1.** Method for controlling wind park (200) comprising several wind power installations (202) to feed electrical power into an electrical AC grid (206) on a point of common coupling (PCC) (204), comprising the following steps:

- Feeding a 3-phase current on the point of common coupling (204),
- Identifying a grid voltage ($\underline{U}_N$) on the point of common coupling,
- Comparing the grid voltage ($\underline{U}_N$), which was identified on the point of common coupling (204), with at least one predetermined set point value, wherein the set point value is determined in such a way that a stability criterion is met, which is depending on the reactive power fed in by the wind park (200), and/or the active power fed in by the wind park,
- Determining an operating point, which is defined according to a set point value for the reactive power and the active power for wind power installations (202) depending on the comparison so that the stability criterion is met on point of common coupling (204), wherein
- the determined set point values of the operating point are transferred to plant control units (212) of individual wind power installations (202) and
- electrical current ( $i_1', i_2', i_3'$ ) is generated on each of the wind power installations (202) depending on the predetermined set point values for the joint feeding on the point of common coupling (204), wherein

a stability boundary is calculated, which forms a boundary between stable and instable operating points and which is stored for the control, to set a stable operating point on the basis of such a determined and stored stability boundary or to monitor an operating point being set.

2. Method according to Claim 1,
   **characterized in that**

   - the current ($I_N$) fed on point of common coupling (204) is identified, and is measured particularly on point of common coupling (204),
   - the identifying of the fed in current ($I_N$), the identifying of the grid voltage ($U_N$) at the point of common coupling (204), the comparing of the grid voltage ($U_N$) identified at the point of common coupling (204) with at least one predetermined set point value and/or the determining of set point values is performed by a central control unit (208),
   - the set point values are determined depending on at least one variable stability criterion, whereby the stability criterion particularly depends on a grid condition of the AC grid (206) on point of common coupling (204).

3. Method according to Claim 1 or 2,
   **characterized in that**
   the set point values are determined based on a breakdown into a positive sequence component and a negative sequence component according to the method of the symmetrical components, and that the set point values are values of the positive sequence component, i.e.,

   - at least one reactive power $Q_{WEC}^+$ of the respective wind power installation (202) that is to be fed in and related to the positive sequence component,
   - at least one output or clamp voltage $U_{WEC}^+$ of the respective wind power installation (202) that is related to the positive sequence component, and/or
   - at least one active power of the respective wind power installation (202) that is to be fed in and related to the positive sequence component, particularly a maximum active power $P_{maxWEC}^+$ that is to be fed in.

4. Method according to claim 2,
   **characterized in that**
   the stability boundary is stored in the central control unit (208) as a characteristic map.

5. Method according to one of the above claims,
   **characterized in that**
   the active power $Q_{WEC}$ that is to be fed in and the reactive power $P_{WEC}$ that is to be fed in are limited, and respective set point values are determined and passed on to the plant controls.

6. Method according to one of the above claims,
   **characterized in that**
   parameters of the grid feed-in point (204) are derived from measurements on grid feed-in point (204), particularly from the identification of the voltage and/or the current, in order to assess characteristics of the AC grid (206).

7. Method according to one of the above claims,
   **characterized in that**
   grid sensitivities are recorded and stored during a previously conducted grid analysis, and current grid sensitivities are identified for a current operating point, and a control, particularly that at least one set point value is predetermined and changed depending on a comparison of the current grid sensitivity with the previously recorded grid sensitivities, particularly that a set point value for the active power that is to be fed in is reduced, if, as a result of the comparison, a deviation exceeds or falls short of a predetermined threshold value ($\Delta U_t$).

**8.** Method according to one of the above claims,
**characterized in that**
a set point value for the reactive power that is to be fed in and/or the active power that is to be fed in is changed suddenly and/or, based on the response of the voltage of the grid (206) on the point of common coupling (204), a current grid sensitivity is determined based on a (or said) sudden change.

**9.** Method according to one of the above claims,
**characterized in that**
an hysteresis controller is used to predetermine the set point values, and/or at least one of the set point values is changed, if at least one state variable in the grid (206) meets a predetermined criterion, particularly the grid voltage on point of common coupling (204), i.e., exceeds or falls short of a predetermined threshold value, or exceeds the value of a predetermined threshold value, or leaves a tolerance band, and a predetermined downtime has elapsed thereafter, and the state variable continues to meet the predetermined criterion.

**10.** Method according to one of the above claims,
**characterized in that**
the impedance of at least one supply line from a wind power installation (202) to point of common coupling (204) is taken into consideration when specifying the set point values, if a voltage drop that is to be expected on the supply line is to be considered.

**11.** A wind park (200) with several wind power installations (202), whereby wind park (200) is controlled with a method according to Claims 1 to 10.

**12.** Wind park (200) according to Claim 11,
**characterized in that**
wind park (200) comprises a central control unit (208), and each wind power installation (202) of wind park (200) comprises a plant control unit (212), whereby central control unit (208) is prepared to provide plant control units (212) with predetermined set point values for the reactive power and/or the active power that is to be fed in.

**13.** Wind park (200) according to one of the Claims 11 or 12,
**characterized in that**
on point of common coupling (204), there is a short circuit current ratio (SCR) of <4 (preferably <2, even more preferably <1.5).

**Revendications**

**1.** Procédé de commande d'un parc éolien (200) comprenant plusieurs éoliennes (202) pour injecter de la puissance électrique sur un point de raccordement au réseau (PCC) (204) dans un réseau électrique de tension alternative (206), comprenant les étapes :

- d'injection d'un courant triphasé sur le point de raccordement au réseau (204),
- de détection d'une tension de réseau ($U_N$) sur le point de raccordement au réseau,
- de comparaison de la tension de réseau ($U_N$) détectée sur le point de raccordement au réseau (204) à au moins une valeur théorique spécifiée, dans lequel la valeur théorique est spécifiée pour respecter un critère de stabilité qui dépend de la puissance réactive injectée par le parc éolien (200) et/ou de la puissance active injectée par le parc éolien,
- de définition d'un point de fonctionnement, qui est défini à partir de respectivement une valeur théorique pour la puissance active et réactive pour les éoliennes (202) en fonction de la comparaison mise en œuvre de telle sorte que le critère de stabilité est respecté sur le point de raccordement au réseau (204), dans lequel
- les valeurs théoriques définies du point de fonctionnement sont transférées sur des unités de commande d'installation (212) des diverses éoliennes (202) et
- du courant électrique ($i_1$, $i_2$, $i_3$) est généré sur chacune des éoliennes (202) en fonction des valeurs théoriques spécifiées pour l'injection commune sur le point de raccordement au réseau (204), dans lequel

une limite de stabilité est calculée au préalable, laquelle forme une limite entre des points de fonctionnement stables et des points de fonctionnement instables et laquelle est enregistrée pour la commande pour régler un point de fonctionnement stable à l'aide d'une limite de stabilité de ce type déterminée et enregistrée ou pour surveiller un point de fonctionnement réglé.

2. Procédé selon la revendication 1,
   **caractérisé en ce que**

   - le courant ($I_N$) injecté sur le point de raccordement au réseau (204) est détecté, en particulier est mesuré sur le point de raccordement au réseau (204),
   - la détection du courant ($I_N$) injecté, la détection de la tension de réseau ($U_N$) sur le point de raccordement au réseau (204), la comparaison de la tension de réseau ($\underline{U}_N$) détectée sur le point de raccordement au réseau (206) à au moins une valeur théorique spécifiée, et/ou la définition des valeurs théoriques par une unité de commande centrale (208) sont mises en œuvre,
   - la définition des valeurs théoriques est effectuée en fonction d'au moins un critère de stabilité variable, dans lequel le critère de stabilité dépend en particulier d'un état de réseau du réseau de tension alternative (206) sur le point de raccordement au réseau (204) .

3. Procédé selon la revendication 1 ou 2,
   **caractérisé en ce que**
   la définition des valeurs théoriques est fondée sur une décomposition en système direct et en système inverse selon la méthode des composants symétriques et les valeurs théoriques sont des valeurs du système direct, à savoir

   - respectivement au moins une puissance réactive $Q^+_{WEC}$, à injecter, se rapportant au système direct, de l'éolienne (202) respective,
   - respectivement au moins une tension de sortie ou de bornes $U^+_{WEC}$, se rapportant au système direct, de l'éolienne (202) respective, et/ou
   - respectivement au moins une puissance active à injecter, se rapportant au système direct, de l'éolienne (202) respective, en particulier une puissance active $P^+_{max,WEC}$ à injecter au maximum.

4. Procédé selon la revendication 2,
   **caractérisé en ce que**
   la limite de stabilité est enregistrée en tant que champ caractéristique dans l'unité de commande centrale (208) .

5. Procédé selon l'une quelconque des revendications précédentes,
   **caractérisé en ce que**
   la puissance active $Q_{WEC}$ à injecter et la puissance réactive $P_{WEC}$ à injecter sont limitées et des valeurs théoriques correspondantes sont définies et sont transférées à des commandes d'installation.

6. Procédé selon l'une quelconque des revendications précédentes,
   **caractérisé en ce que**
   des grandeurs caractéristiques du point d'injection de réseau (204) sont déduites de mesures sur le point d'injection dans le réseau (204), en particulier de la détection de la tension et/ou du courant pour apprécier des caractéristiques du réseau de tension alternative (206) .

7. Procédé selon l'une quelconque des revendications précédentes,
   **caractérisé en ce que**
   des sensibilités de réseau sont relevées par une analyse de réseau mise en œuvre au préalable et sont sauvegardées et des sensibilités de réseau instantanées sont détectées à un point de fonctionnement instantané et une commande, en particulier une spécification ou modification d'au moins une valeur théorique, est effectuée en fonction d'une comparaison des sensibilités de réseau instantanées aux sensibilités de réseau relevées au préalable, en particulier qu'une valeur théorique est réduite pour une puissance active à injecter quand lors de la comparaison, un écart dépasse ou ne dépasse pas une valeur limite ($\Delta U_t$) prédéfinie.

8. Procédé selon l'une quelconque des revendications précédentes,
   **caractérisé en ce que**
   une modification d'une valeur théorique est effectuée brusquement pour la puissance réactive à injecter et/ou la puissance active à injecter, et/ou une sensibilité de réseau instantanée est définie sur la base d'une réaction de la tension du réseau (206) sur le point de raccordement au réseau (204) à une ou à ladite modification brusque.

9. Procédé selon l'une quelconque des revendications précédentes,

**caractérisé en ce que**
un régulateur d'hystérèse est utilisé pour spécifier les valeurs théoriques et/ou une modification d'au moins une des valeurs théoriques est effectuée quand une grandeur d'état dans le réseau (206), en particulier la tension de réseau sur le point de raccordement au réseau (204) remplit un critère prédéfini, à savoir dépasse ou ne dépasse pas une valeur limite prédéfinie, ou la dépasse en termes de valeur ou quitte une plage de tolérance puis un temps mort prédéfini s'est écoulé et la grandeur d'état remplit par ailleurs le critère prédéfini.

10. Procédé selon l'une quelconque des revendications précédentes,
    **caractérisé en ce que**
    l'impédance d'au moins une ligne d'arrivée depuis une éolienne (202) vers le point de raccordement au réseau (204) est prise en compte lors de la spécification des valeurs théoriques pour prendre en compte une chute de tension attendue sur la ligne d'arrivée.

11. Parc éolien (200) avec plusieurs éoliennes (202), dans lequel le parc éolien (200) est commandé avec un procédé selon l'une quelconque des revendications 1 à 10.

12. Parc éolien (200) selon la revendication 11,
    **caractérisé en ce que**
    le parc éolien (200) comprend une unité de commande centrale (208) et que chaque éolienne (202) du parc éolien (200) comprend une unité de commande d'installation (212), dans lequel l'unité de commande centrale (208) est préparée pour spécifier aux unités de commande d'installation (212) des valeurs théoriques pour la puissance réactive à injecter et/ou la puissance active à injecter.

13. Parc éolien (200) selon l'une quelconque des revendications 11 ou 12,
    **caractérisé en ce que**
    un rapport de courant de court-circuit (SCR) inférieur à 4, en particulier inférieur à 2, en particulier inférieur à 1,5, est présent sur le point de raccordement au réseau (206).

Fig. 1

**Fig. 2**

Fig. 3

Fig. 5

Fig. 4

Fig. 6

Spannungsintensität [pu/MW] am PCC abhängig der Leistung der Micro-WEA

Fig. 7

Spannungsintensität [pu/MVAr] am PCC abhängig der Leistung der Micro-WEA

Fig. 8

Fig. 9

Fig. 10

EP 2 875 562 B1

Fig. 11

Fig. 12

$$i'_1(t), i'_2(t), i'_3(t)$$

Zeitgeber 2

$$i'_1(t) = I^+_{WEC} \cdot \sin\left(\varphi^+_{\underline{U}} + \varphi^+_{\underline{I}WEC}\right)$$

$$i'_2(t) = I^+_{WEC} \cdot \sin\left(\varphi^+_{\underline{U}} + \varphi^+_{\underline{I}WEC} + \frac{4}{3}\pi\right)$$

$$i'_3(t) = I^+_{WEC} \cdot \sin\left(\varphi^+_{\underline{U}} + \varphi^+_{\underline{I}WEC} + \frac{2}{3}\pi\right)$$

250

$$\varphi^+_{\underline{U}}$$

$$I^+_{WEC} = \sqrt{\left(I^{+c}_{WEC}\right)^2 + \left(I^{+s}_{WEC}\right)^2}$$

$$\varphi^+_{\underline{I}WEC} = \arctan\left(I^{+s}_{WEC} \,/\, I^{+c}_{WEC}\right)$$

248

212

$$I^{+s}_{WEC} = Q^+_{WEC} \,/\, U^+_{WEC}$$

246

242 — pT$_1$ · · · pT$_1$ — 244

212

$$I^{+c}_{WEC}$$

$$U^+_{WEC}$$

$$Q^+_{WEC}$$

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02086315 A
- WO 02086314 A
- WO 0186143 A
- WO 9933165 A
- WO 02044560 A
- WO 03030329 A1
- DE 102009030725 A2
- WO 2011050807 A2
- EP 2267302 A2
- EP 1512869 A1

- DE 102007005165 A1
- DE 102007039697 A1
- WO 2009083448 A2
- WO 9745908 A1
- EP 2236820 A2
- WO 2007006565 A2
- DE 102009031017 A1
- US 13381302 B
- DE 102011084910

**In der Beschreibung aufgeführte Nicht-Patentliteratur**

- **VON V. DIEDRICHS et al.** Loss of (Angle) Stability of Wind Power Plants. *10th International Workshop on Large-Scale Integration of Wind Power into Power Systems as well as on Transmission Networks for Offshore Wind Farms, Aarhus (Denmark),* 25. Oktober 2011
- **KUNDUR, P.** Power Systems Stabililty and Control. McGraw-Hill
- **VON VOLKER DIEDRICHS ; ALFRED BEEKMANN ; STEPHAN ADLOFF.** Loss of (Angle) Stability of Wind Power Plants- The Underestimated Phenomenon in Case of Very Low Short Circuit Ratio. *10th International Workshop on Large-Scale Integration of Wind Power into Power Systems as well as on Transmission Networks for Offshore Wind Farms,* 26. Oktober 2011

- Automatic Generation Control of a Wind Farm with Variable Speed Wind Turbines. **JOSE LUIS RODRIGUEZ-AMENEDORODRIGUEZ-AMENEDO et al.** IEEE transactions on energy conversion. IEEE service center, piscataway, 01. Juni 2002, vol. 17
- Netzanbindung von Windkraftanlagen. **BRAUNER, G.** Elektrotechnik und Informationstechnik. Springer Verlag, 01. Januar 1999, vol. 116, 428-432